# EUROPEAN PATENT SPECIFICATION

(11) **EP 1 134 723 B1**
(45) Date of publication and mention of the grant of the patent: **05.09.2007**
(21) Application number: 01301385.9
(22) Date of filing: 16.02.2001
(51) Int. Cl.: G10H 1/00

(54) **Game device with control method and game distribution method**
Spielvorrichtung mit Steuerungsverfahren und Verfahren zur Spielverteilung
Dispositif de jeu avec méthode de commande et méthode de distribution de jeu

(30) Priority: 16.02.2000 JP 2000038876
(43) Date of publication of application: 19.09.2001
(73) Proprietor: Konami Corporation, Tokyo (JP); KCE Tokyo Inc., Tokyo (JP)
(72) Inventor: Nobe, Kazuhiko, Chiyoda-ku, Tokyo (JP); Kuraishi, Hidetoshi, Chiyoda-ku, Tokyo (JP)
(74) Representative: Pluckrose, Anthony William

(56) References cited:
- EP-A- 0 417 574
- EP-A- 0 823 270
- US-A- 5 735 744
- US-A- 5 857 856

## Description

The present invention relates to a game device, a game device control method, an information storage medium, a game distribution device, and a game distribution method. In particular, the present invention relates to a technique for making a game, in which a player operates a controller in accordance with game music, more attractive.

Arcade game devices and game software in which game music is output and a player operates an input device in accordance with the rhythm of the output game music so that the player can enjoy the feeling of playing music or dancing, are popular. A typical example of such a device or software may include "Beat Mania^{™}" and "Dance, Dance, Revolution^{™}", both manufactured and sold by Konami Corporation.

In such music-oriented games, operation timing data representing timings at which a player operates an input device is prepared in accordance with the rhythm of music, and operation timings gradually approaching are shown on a display, based on the operation timing data. Thus, the game player operates the input device while looking at the display and listening to the music. The player's game result is evaluated based on the amount of difference between the timing at which the player actually operated the input device and the timing defined by the operation timing data.

In order to realize such a music-oriented game in a home-use game machine, generally, game music data and corresponding operation timing data are stored in a single CD-ROM, together with a game program, and the home-use game machine reads the game music data and corresponding operation timing data from the CD-ROM. The home-use game machine then conducts reproduction of game music and displaying of guidance based on the data read. In an arcade game device, similarly, game music data and corresponding operation timing data are stored beforehand in the incorporated hard disk device and so on.

Despite the current popularity of the above devices, no proposal has been made for a game device which reads recorded content, including music data, from a commercially available music information storage medium (such as a commercially available CD (compact disk) or a DVD (digital video disk)), and realizes a music-oriented game using, as game music, the music based on the read content.

When such a game device is realized, the player operates the game device to have it read music from a commercially available music CD and so on among the player's CD collection so that he can enjoy a music-oriented game, using the music read. This makes the game device more attractive. Moreover, a purchaser of a commercially available music CD may find the commercially available music CD more valuable as the purchaser can use the CD not only for enjoying the music itself, but also for using the music as original data for a music-oriented game device.

EP 0 823 270 describes a video dance game apparatus that reads recorded content from a CD to reproduce music as game music and stores timing data indicative of timing, at which a player should operate a controller with guiding timings for instructing a player when to operate the controller.

Conventionally, in order to realize a music-oriented game, using a general music CD, the recorded content of the general, commercially available music CD (a compact disk) must be copied beforehand to a CD-ROM or a hard disk device which contains a game program. This may complicate issues mostly concerning a copyright: This is one of the major obstacles hindering the development of such music-oriented games. This problem can be solved should the above-described game device be realized.

The present invention, in a first aspect, provides a game device having a controller operated by a player in accordance with game music, comprising:
commercially available music CD reproducing means for reading recorded content from a commercially available music CD to reproduce music as game music based on the recorded content read;
commercially available CD judgement means for reading recorded content from a commercially available music CD to judge whether or not the commercially available music CD is a predetermined commercially available music CD based on the recorded content read, wherein the CD judgement means includes judgement data storage means with the CD judgement means being arranged to judge whether or not the music CD is a predetermined music CD by comparing the recorded content of the music CD with information stored beforehand in the judgement data storage means;
operation timing data storage means for storing operating timing data indicative of timings at which the player should operate the controller in accordance with the game music reproduced based on the recorded content read from the predetermined commercially available music CD; and
music game execution means for causing the commercially available music CD reproducing means to reproduce music as game music based on the recorded content read from the commercially available music CD, in response to a judgment such that the commercially available music CD, of which recorded content is read by the commercially available music CD judgment means, is the predetermined commercially available music CD, and for guiding timings at which the player should operate the controller in accordance with the game music reproduced, based on the operation timing data.

In a second aspect, the present invention provides an information storage medium storing game program code and game data for causing a computer to function as a game device having a controller operated by a player in accordance with game music, the computer being equipped with a commercially available music CD reproducing function for reading recorded content from a commercially available music CD to reproduce music based on the recorded content read, wherein
the information storage medium stores operation timing data, as at least a part of the game data, indicative of timings at which the player should operate the controller in accordance with the game music reproduced based on the recorded content read from a predetermined commercially available music CD, and program code, as at least a part of the game program code, for causing the computer to function as;
commercially available music CD reproducing means for reading recorded content from a commercially available music CD to reproduce music as game music based on the recorded content read by using the commercially available music CD reproducing function;
commercially available CD judgement means for reading recorded content from a commercially available music CD by using the commercially available music CD reproducing function to judge whether or not the commercially available music CD is the predetermined commercially available music CD based on the recorded content read, wherein the CD judgement means includes judgement data storage means with the CD judgement means being arranged to judge whether or not the music information CD is a predetermined music CD by comparing the recorded content of the music CD with information stored beforehand in the judgement data storage means; and
music game execution means for causing the commercially available music CD reproducing means to reproduce music as game music based on the recorded content read from the commercially available music CD, in response to a judgement such that the commercially available music CD, of which recorded content is read by the commercially available music CD judgement means, is the predetermined commercially available music CD, and for guiding timings at which the player should operate the controller in accordance with the game music reproduced, based on the operation timing data.

In a third aspect, the present invention provides a method for controlling a game device equipped with a commercially available music CD reading and reproducing function and having a controller operated by a player in accordance with game music, the method comprising:
a commercially available music CD reproducing step of reading recorded content from a commercially available music CD to reproduce music as game music based on the recorded content read by using the commercially available music CD reproducing function; a commercially available CD judgement step of reading recorded content from a commercially available music CD by using the commercially available music CD reproducing function to judge whether or not the commercially available music CD is a predetermined commercially available music CD based on the recorded content read, wherein the CD judgement step includes judging whether or not the music CD is a predetermined music CD by comparing the recorded content of the music CD with information stored beforehand;
an operation timing data obtaining step of obtaining operating timing data indicative of timings at which a player should operate the controller in accordance with the game music reproduced based on the recorded content read from the predetermined commercially available music CD; and
a music game execution step of effecting reproduction of music as game music at the commercially available music CD reproducing step based on the recorded content read from the commercially available music CD, in response to a judgement such that the commercially available music CD, of which recorded content is read at the commercially available music CD reproducing step, is the predetermined commercially available music CD, and of guiding timings at which the player should operate the controller in accordance with the game music reproduced, based on the operation timing data.

In a fourth aspect, the present invention provides a game distribution device for distributing game program code and game data for causing a computer to function as a game device having a controller operated by a player in accordance with game music, the computer being equipped with a commercially available music CD reproducing function for reading recorded content from a commercially available music CD to reproduce music based on the recorded content read, Wherein the game distribution device distributes operation timing data, as at least a part of the game data, indicative of timings at which the player should operate the controller in accordance with the game music reproduced based on the recorded content read from a predetermined commercially available music CD, and program code, as at least a part of the game program code, for causing the computer to function as
commercially available music CD reproducing means for reading recorded content from a commercially available music CD to reproduce music as game music based on the recorded content read by using the commercially available music CD reproducing function;
commercially available CD judgement means for reading recorded content from a commercially available music CD by using the commercially available music CD reproducing function to judge whether or not the commercially available music CD is the predetermined commercially available music CD based on the recorded content read, wherein the CD judgement means includes judgement data storage means with the CD judgement means being arranged to judge whether or not the music CD is a predetermined music CD by comparing the recorded content of the music CD with information stored beforehand in the judgement data storage means; and
music game execution means for causing the commercially available music CD reproducing means to reproduce music as game music based on the recorded content read from the commercially available music CD, in response to a judgement such that the commercially available music CD, of which recorded content is read by the commercially available music CD judgement means, is the predetermined commercially available music CD, and for guiding timings at which the player should operate the controller in accordance with the game music reproduced, based on the operation timing data.

In a fifth aspect, the present invention provides a game distribution method for distributing game program code and game data for causing a computer to function as a game device having controller operated by a player in accordance with game music, the computer being equipped with a commercially available music CD reproducing function for reading recorded content from a commercially available music CD to reproduce music based on the recorded content read, the method comprising:
an operation timing data distribution step of distributing operation timing data, as at least a part of the game data, indicative of timings at which the player should operate the controller in accordance with the game music reproduced based on the recorded content read from a predetermined commercially available music CD; and
a program distribution step of distributing program code, as at least a part of the game program code, for causing the computer to function as;
commercially available music CD reproducing means for reading recorded content from a commercially available music CD to reproduce music as game music based on the recorded content read by using the commercially available music CD reproducing function;
commercially available CD judgement means for reading recorded content from a commercially available music CD by using the commercially available music CD reproducing function to judge whether or not the commercially available music CD is the predetermined commercially available music CD based on the recorded content read, wherein the CD judgement means includes judgement data storage means with the CD judgement means being arranged to judge whether or not the music CD is a predetermined music CD by comparing the recorded content of the music CD with information stored beforehand in the judgement data storage means; and
music game execution means for causing the commercially available music CD reproducing means to reproduce music as game music based on the recorded content read from the commercially available music CD, in response to a judgement such that the commercially available music CD, of which recorded content is read by the commercially available music CD judgement means, is the predetermined commercially available music CD, and for guiding timings at which the player should operate the controller in accordance with the game music reproduced, based on the operation timing data.

In a sixth aspect, the present invention provides a game device of which controller is operated by a player in accordance with game music, comprising:
commercially available music reproducing means for reading recorded content from a commercially available music information storage medium which records at least music data, to reproduce music as game music based on the recorded content read;
commercially available music information storage medium judgement means for judging whether or not the commercially available music information storage medium, recording content of which is read by the commercially available music reproducing means, is a predetermined commercially available music information storage medium, wherein the judgement means includes judgement data storage means with the judgement means being arranged to judge whether or not the music information storage medium is a predetermined music information storage medium by comparing the recorded content of the music information storage medium with information stored beforehand in the judgement data storage means; operation timing data storage means for storing operating timing data indicative of timings at which the player should operate the controller in accordance with the game music reproduced based on the recorded content read from the predetermined commercially available music information storage medium; and
music game execution means for causing the commercially available music reproducing means to reproduce music as game music based on the recorded content read from the commercially available music information storage medium, in response to a judgement such that the commercially available music information medium, of which recorded content is read by the commercially available music reproducing means, is the predetermined commercially available music CD, and for guiding timings at which the player should operate the controller in accordance with the game music reproduced, based on the operation timing data.

In a seventh aspect, the present invention provides an information storage medium storing game program code and game data for causing a computer to function as a game device having a controller operated by a player in accordance with game music, the computer being equipped with a commercially available music information storage medium reproducing function for reading recorded content from a commercially available music information storage medium which records at least music data, to reproduce music based on the recorded content read, wherein
the information storage medium stores operation timing data, as at least a part of the game data, indicative of timings at which the player should operate the controller in accordance with the game music reproduced based on the recorded content read from a predetermined commercially available music information storage medium, and program code, as at least a part of the game program code, for causing the computer to function as;
commercially available music information storage medium reproducing means for reading recorded content from a commercially available music information storage medium to reproduce music as game music based on the recorded content read by using the commercially available music information storage medium reproducing function; commercially available music information storage medium
judgement means for reading recorded content from a commercially available music information storage medium by using the commercially available music information storage medium reproducing function to judge whether or not the commercially available music information storage medium is the predetermined commercially available music information storage medium based on the recorded content read, wherein the judgement means includes judgement data storage means with the judgement means being arranged to judge whether or not the music information storage medium is a predetermined music information storage medium by comparing the recorded content of the music information storage medium with information stored beforehand in the judgement data storage means; and
music game execution means for causing the commercially available music information storage medium reproducing means to reproduce music as game music based on the recorded content read from the commercially available music information storage medium, in response to a judgement such that the commercially available music information storage medium, of which recorded content is read by the commercially available music information storage medium judgement means, is the predetermined commercially available music information storage medium, and for guiding timings at which the player should operate the controller in accordance with the game music reproduced, based on the operation timing data.

In an eighth aspect, the present invention provides a game device having a controller operated by a player in accordance with game music, comprising:
music data reproducing means for obtaining music data from a music data distribution server via a communication network to reproduce music as game music based on the music data obtained;
music data judgement means for judging whether or not the music data obtained by the music data reproducing means is predetermined music data, wherein the music data judgement means includes judgement data storage means with the music data judgement means being arranged to judge whether or not the music data is predetermined music data by comparing the obtained content of the music data with information stored beforehand in the judgement data storage means;
operation timing data obtaining means for obtaining operation timing data indicative of timings at which the player should operate the controller in accordance with the game music reproduced based on the predetermined music data;
and music game execution means for causing the music data reproducing means to reproduce music as game music based on the music data, in response to a judgement such that the music data obtained by the music data reproducing means is the predetermined music data, and for guiding timings at which the player should operate the controller in accordance with the game music reproduced, based on the operation timing data.

In a ninth aspect, the present invention provides an information storage medium storing game program code and game data for causing a computer to function as a game device having a controller operated by a player in accordance with game music, wherein the information storage medium stores, as at least a part of the game program code, program code for causing the computer to function as;
music data reproducing means for obtaining music data from a music data distribution server via a communication network to reproduce music as game music based on the music data obtained;
music data judgement means for judging whether or not the music data obtained by the music data reproducing means is predetermined music data, wherein the music data judgement means includes judgement data storage means with the music data judgement means being arranged to judge whether or not the music data is predetermined music data by comparing the obtained content of the music data with information stored beforehand in the judgement data storage means;
operation timing data obtaining means for obtaining operation timing data indicative of timings at which the player should operate the controller in accordance with the game music reproduced based on the predetermined music data; and
music game execution means for causing the music data reproducing means to reproduce music as game music based on the music data, in response to a judgement such that the music data obtained by the music data reproducing means is the predetermined music data, and for guiding timings at which the player should operate the controller in accordance with the game music reproduced, based on the operation timing data.

In a tenth aspect, the present invention provides a game program code for causing a computer to function as a game device having a controller operated by a player in accordance with game music, the computer being equipped with a commercially available music information storage medium reproducing function for reading recorded content from a commercially available music information storage medium recording at least music data, to reproduce music based on the recorded content read, the game program code for;
receiving operation timing data, as at least a part of the game data, indicative of timings at which the player should operate the controller in accordance with the game music reproduced based on the recorded content read from a predetermined commercially available music information storage medium;
reading recorded content from a commercially available music information storage medium to reproduce music as game music based on the recorded content read by using the commercially available music information storage medium reproducing function;
reading recorded content from a commercially available music information storage medium by using the commercially available music information storage medium reproducing function to judge whether or not the commercially available music information storage medium is the predetermined commercially available music information storage medium by comparing the recorded content of the music information storage medium with information stored beforehand; and
causing the commercially available music information storage medium reproducing function to reproduce music as game music based on the recorded content read from the
commercially available music information storage medium, in response to a judgment such that the commercially available music information storage medium is the predetermined commercially available music information storage medium; and guiding timings at which the player should operate the controller in accordance with the game music reproduced, based on the operation timing data.

The present invention has been conceived in view of the above, and aims to provide a game device of a music-oriented type which allows the use of a commercially available music information storage medium (such as a commercially available CD and so on) or a network distribution as a means for obtaining original data for game music. The present invention also aims to provide a control method for such a game device and an information storage medium, a game distribution device, and a game distribution method for achieving such a game device.

There is provided a game device having a controller operated by a player in accordance with game music, comprising commercially available music CD reproducing means for reading recorded content from a commercially available music CD to reproduce music as game music based on the recorded content read; commercially available CD judgement means for reading recorded content from a commercially available music CD to judge whether or not the commercially available music CD is a predetermined commercially available music CD based on the recorded content read; operation timing data storage means for storing operating timing data indicative of timings at which the player should operate the controller in accordance with the game music reproduced based on the recorded content read from
the predetermined commercially available music CD; and music game execution means for causing the commercially available music CD reproducing means to reproduce music as game music based on the recorded content read from the commercially available music CD, in response to a judgement such that the commercially available music CD, of which recorded content is read by the commercially available music CD judgement means, is the predetermined commercially available music CD, and for guiding timings at which the player should operate the controller in accordance with the game music reproduced, based on the operation timing data.
There is provided an information storage medium storing a game program and game data for causing a computer to function as a game device having a controller operated by a player in accordance with game music, the computer being equipped with a commercially available music CD reproducing function for reading recorded content from a commercially available music CD to reproduce music based on the recorded content read. The above information storage medium stores operation timing data, as at least a part of the game data, indicative of timings at which the player should operate the controller in accordance with the game music reproduced based on the recorded content read from a predetermined commercially available music CD, and a program, as at least a part of the game program, for causing the computer to function as commercially available music CD reproducing means for reading recorded content from a commercially available music CD to reproduce music as game music based on the recorded content read by using the commercially available music CD reproducing means; commercially available CD judgement means for reading recorded content from a commercially available music CD by using the commercially available music CD reproducing
function to judge whether or not the commercially available music CD is the predetermined commercially available music CD based on the recorded content read; and music game execution means for causing the commercially available music CD reproducing means to reproduce music as game music based on the recorded content read from the commercially available music CD, in response to a judgement such that the commercially available music CD, of which recorded content is read by the commercially available music CD judgement means, is the predetermined commercially available music CD, and for guiding timings at which the player should operate the controller in accordance with the game music reproduced, based on the operation timing data.
There is provided a method for controlling a game device equipped with a commercially available music CD reading and reproducing function, and having a controller operated by a player in accordance with game music, the method comprising: a commercially available music CD reproducing step of reading recorded content from a commercially available music CD to reproduce music as game music based on the recorded content read by using the commercially available music CD reproducing function; a commercially available CD judgement step of reading recorded content from a commercially available music CD by using the commercially available music CD reproducing function to judge whether or not the commercially available music CD is a predetermined commercially available music CD based on the recorded content read; an operation timing data obtaining step of obtaining operating timing data indicative of timings at which a player should operate the controller in accordance with the game music reproduced based on the recorded content read from the predetermined commercially available music CD; and a music game execution step of effecting reproduction of music as game music in the commercially available music CD reproducing step based on the recorded content read from the commercially available music CD, in response to a judgement such that the commercially available music CD, of which recorded content is read at the commercially available music CD reproducing step, is the predetermined commercially available music CD, and of guiding timings at which the player should operate the controller in accordance with the game music reproduced, based on the operation timing data.
There is provided a game distribution device for distributing a game program and game data for causing a computer to function as a game device having a controller operated by a player in accordance with game music, the computer being equipped with a commercially available music CD reproducing function for reading recorded content from a commercially available music CD to reproduce music based on the recorded content read. The above game distribution device distributes operation timing data, as at least a part of the game data, indicative of timings at which the player should operate the controller in accordance with the game music reproduced based on the recorded content read from a predetermined commercially available music CD, and a program, as at least a part of the game program, for causing the computer to function as commercially available music CD reproducing means for reading recorded content from a commercially available music CD to reproduce music as game music based on the recorded content read by using the commercially available music CD reproducing function; commercially available CD judgement means for reading recorded content from a commercially available music CD by using the commercially available music CD reproducing function to judge whether or not the commercially available music CD is the predetermined commercially available music CD based on the recorded content read; and music game execution means for causing the commercially available music CD reproducing means to reproduce music as game music based on the recorded content read from the commercially available music CD, in response to a judgement such that the commercially available music CD, of which recorded content is read by the commercially available music CD judgement means, is the predetermined commercially available music CD, and for guiding timings at which the player should operate the controller in accordance with the game music reproduce, based on the operation timing data.
There is provided a game distribution method for distributing a game program and game data for causing a computer to function as a game device having a controller operated by a player in accordance with game music, the computer being equipped with a commercially available music CD reproducing function for reading recorded content from a commercially available music CD to reproduce music based on the recorded content read, the method comprising an operation timing data distribution step of distributing operation timing data, as at least a part of the game data, indicative of timings at which the player should operate the controller in accordance with the game music reproduced based on the recorded content read from a predetermined commercially available music CD; and a program distribution step of distributing a program, as at least a part of the game program, for causing the computer to function as commercially available music CD reproducing means for reading recorded content from a commercially available music CD to reproduce music as game music based on the recorded content read by using the commercially available music CD reproducing function; commercially available CD judgement means for reading recorded content from a commercially available music CD by using the commercially available music CD reproducing function to judge whether or not the commercially available music CD is the predetermined commercially available music CD based on the recorded content read; and music game execution means for causing the commercially available music CD reproducing means to reproduce music as game music based on the recorded content read from the commercially available music CD, in response to a judgement such that the commercially available music CD, of which recorded content is read by the commercially available music CD judgement means, is the predetermined commercially available music CD, and for guiding timings at which the player should operate the controller in accordance with the game music reproduced, based on the operation timing data.

Therefore, according to the present invention, in the case where the commercially available music CD is a predetermined commercially available music CD, music is reproduced as game music based on the recorded content of that commercially available music CD, and timings at which the player is required to operate the controller in accordance with the game music reproduced based on the recorded content of that commercially available music CD is guided based on the operation timing data by displaying an image, outputting audio, or the like. With this arrangement, the player can enjoy a music-oriented game, using a predetermined commercially available music CD.
Also, according to a game distribution device and method of the present invention, a demander can easily obtain a game program and game data, which are necessary for the demander to enjoy a music-oriented game, using a predetermined commercially available music CD.

The commercially available music CD judgement means may include judgement data storage means for storing beforehand at least a part of the recorded content of the predetermined commercially available music CD as judgement data, and judges whether or not the commercially available music CD, of which recorded content is read by the commercially available music CD judgement means, is the predetermined commercially available music CD by comparing the judgement data and the recorded content of the commercially available music CD, read by the commercially available music CD judgement means. Here, at least a part of the recorded content of the predetermined commercially available music CD is stored beforehand as judgement data. At the commercially available music CD judgement step, the judgement data is compared with the recorded content of a commercially available music CD, read by the commercially available music CD judgement means, whereby whether or not that commercially available music CD is the predetermined commercially available music CD is judged. With this arrangement, whether or not a certain commercially available music CD is a predetermined commercially available music CD associated with game music, can be easily judged.

There is provided a game device having a controller operated by a player in accordance with game music, comprising commercially available music reproducing means for reading recorded content from a commercially available music information storage medium which records at least music data, to reproduce music as game music based on the recorded content read; commercially available music information storage medium judgement means for judging whether or not the commercially available music information storage medium, recording content of which is read by the commercially available music reproducing means, is a predetermined commercially available music information storage medium; operation timing data storage means for storing operating timing data indicative of timings at which the player should operate the controller in accordance with the game music reproduced based on the recorded content read from the predetermined commercially available music information storage medium; and music game execution means for causing the commercially available music reproducing means to reproduce music as game music based on the recorded content read from the commercially available music information storage medium, in response to a judgement such that the commercially available music information medium, of which recorded content is read by the commercially available music reproducing means, is the predetermined commercially available music CD, and for guiding timings at which the player should operate the controller in accordance with the game music reproduced, based on the operation timing data.

There is provided an information storage medium storing a game program and game data for causing a computer to function as a game device having a controller operated by a player in accordance with game music, the computer being equipped with a commercially available music information storage medium reproducing function for reading recorded content from a commercially available music information storage medium which records at least music data, to reproduce music based on the recorded content read. The above information storage medium stores operation timing data, as at least a part of the game data, indicative of timings at which the player should operate the controller in accordance with the game music reproduced based on the recorded content read from a predetermined commercially available music information storage medium, and a program, as at least a part of the game program, for causing the computer to function as commercially available music information storage medium reproducing means for reading recorded content from a commercially available music information storage medium to reproduce music as game music based on the recorded content read by using the commercially available music information storage medium reproducing function; commercially available music information storage medium judgement means for reading recorded content from a commercially available music information storage medium by using the commercially available music information storage medium reproducing function to judge whether or not the commercially available music information storage medium is the predetermined commercially available music information storage medium based on the recorded content read; and music game execution means for causing the commercially available music information storage medium reproducing means to reproduce music as game music based on the recorded content read from the commercially available music information storage medium, in response to a judgement such that the commercially available music information storage medium, of which recorded content is read by the commercially available music information storage medium judgement means, is the predetermined commercially available music information storage medium, and for guiding timings at which the player should operate the controller in accordance with the game music reproduced, based on the operation timing data.

In the case where the commercially available music information storage medium, such as a commercially available music CD, a commercially available DVD, and so on, is a predetermined commercially available music information storage medium, music is reproduced as game music based on the recorded content of that commercially available music information storage medium, and timings at which the player is required to operate the controller in accordance with the game music reproduced based on the recorded content of that commercially available music information storage medium is guided based on the operation timing data by displaying an image, outputting audio, or the like. With this arrangement, the player can enjoy a music-oriented game, using a predetermined commercially available music information storage medium.

There is provided a game device having a controller operated by a player in accordance with game music, comprising
music data reproducing means for obtaining music data from a music data distribution server via a communication network to reproduce music as game music based on the music data obtained; music data judgement means for judging whether or not the music data obtained by the music data reproducing means is predetermined music data; operation timing data obtaining means for obtaining operation timing data indicative of timings at which the player should operate the controller in accordance with the game music reproduced based on the predetermined music data; and music game execution means for causing the music data reproducing means to reproduce music as game music based on the predetermined music data, in response to a judgement such that the music data obtained by the music data reproducing means is the predetermined music data, and for guiding timings at which the player should operate the controller in accordance with the game music reproduced, based on the operation timing data.

According to still another aspect of the present invention, there is provided an information storage medium storing a game program and game data for causing a computer to function as a game device having controller operated by a player in accordance with game music. The information storage medium stores, at least as a part of the game program, a program for causing the computer to function as music data reproducing means for obtaining music data from a music data distribution server via a communication network to reproduce music as game music based on the music data obtained; music data judgment means for judging whether or not the music data obtained by the music data reproducing means is predetermined music data; operation timing data obtaining means for obtaining operation timing data indicative of timings at which the player should operate the controller in accordance with the game music reproduced based on the predetermined music data; and music game execution means for causing the music data reproducing means to reproduce music as game music based on the predetermined music data, in response to a judgment such that the music data obtained by the music data reproducing means is the predetermined music data, and for guiding timings at which the player should operate the controller in accordance with the game music reproduced, based on the operation timing data. In the case where the music data obtained via a communication network is predetermined music data, music is reproduced as game music based on the music data, and timings at which the player is required to operate the controller in accordance with the reproduced game music is guided based on the operation timing data by displaying an image, outputting audio, or the like. With this arrangement, game music can be reproduced based on the music data obtained via a communication network, and a music-oriented game can be realized using the reproduced game music.

The present invention will now be described by way of example only with reference to the accompanying drawings, in which:
Fig. 1 is a schematic diagram showing a structure of a game device according to one preferred embodiment of the present invention;
Fig. 2 is a diagram showing an example appearance of a controller;
Fig. 3 is a diagram showing an example of a game screen image;
Fig. 4 is a schematic diagram showing a structure of operation timing data;
Fig. 5 is a flowchart illustrating an operation of a game device according to one preferred embodiment of the present invention; and
Fig. 6 is a schematic diagram showing overall structure of a game program distribution system according to another preferred embodiment of the present invention.

The entire disclosure of the corresponding Japanese application 2000-38876 filed on February 16, 2000 including specification, claims, drawings and summary are incorporated herein by reference.

In the following, preferred embodiments of the present invention will be described in detail with reference to the accompanying drawings.

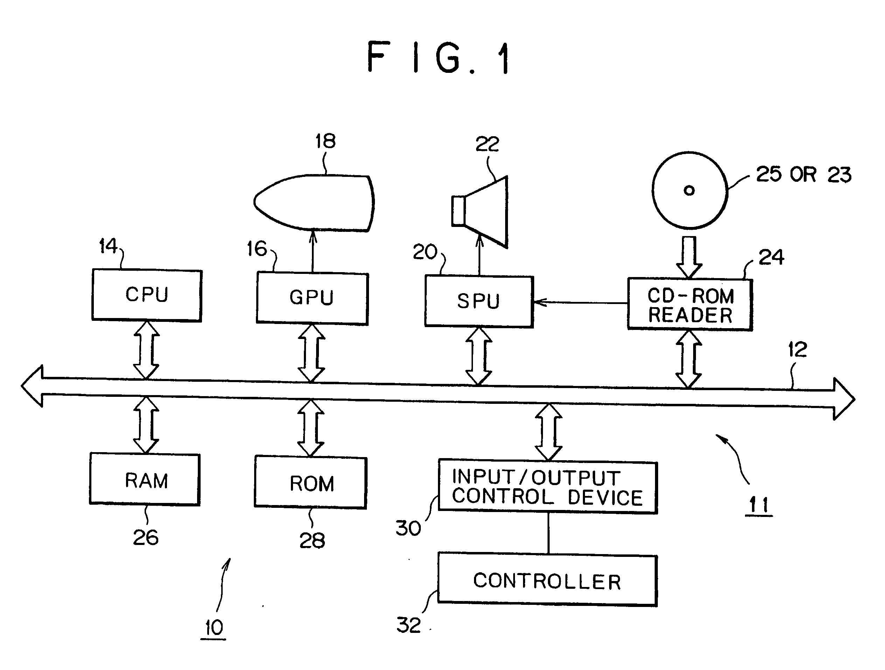

Fig. 1 is a diagram showing a structure of a game device according to a preferred embodiment of the present invention. A device 10 comprises a CD-ROM 25, or an information storage medium, mounted in a home-use game machine 11, which is in turn connected to a monitor 18 and a speaker 22. Note that although a CD-ROM 25 is used here to supply a game program and game data to the home-use game machine 11, any other information storage media, such as a DVD or a ROM card, may be used instead. Alternatively, a game program and game data may be remotely supplied to the home-use game machine 11 via a communication network, as will be described later.

A home-use game machine 11 comprises a CPU 14, a GPU 16, an SPU 20, a CD-ROM reader 24, RAM 26, ROM 28, and an input/output control device 30, mutually connected via a bus 12 for data exchange, with the input/output control device 30 being further connected to a controller 32 via a cable. The respective elements of the home-use game machine 11 other than the controller 32 are all accommodated in a predetermined single housing. By way of example, the monitor 18 may be a home TV receiver, and the speaker 22 may be a speaker incorporated into the home TV receiver.

The CPU 14 has a structure comprising a microprocessor, and controls the respective elements of the home-use game machine 11 based on an operating system stored in the ROM 26 and a game program read from the CD-ROM 25. The bus 12 is used for exchanging addresses and data among the respective elements of the home-use game machine 11. The ROM 28 stores an operating system, which is a basic program indispensable for comprehensive operation of the home-use game machine 11. The RAM 26 is used for storing game program and game data read from the CD-ROM 25 upon necessity. The GPU (graphics processing unit) 16, which includes a frame buffer, receives image data from the CPU 14, and draws a game screen image in the frame buffer based on the received input data. The GPU 16, moreover, converts the content of the frame buffer into a video signal, and outputs the signal to the monitor 18 at a predetermined timing.

An SPU (sound processing unit) 20, which has a sound buffer, reproduces data for music, a game effect sound, and so on, which are read from the CD-ROM 25 and stored in the sound buffer, and outputs sounds with the speaker 22. The CD-ROM reader 24 responds to an instruction from the CPU 14 to read a game program and game data from the CD-ROM 25. The CD-ROM reader 24 has a function for reading recorded content of a commercially available music CD 23 and reproducing music based on the read, recorded content to output from the speaker 22 via the SPU 20. In this embodiment, the CD-ROM 25 records a game program and game data necessary for realizing a music game, and music recorded in a commercially available music CD 23 is used as game music.

The input/output control device 30 is an interface for connecting one or more external input/output devices to the home-use game machine 11. A controller 32 is detachably connected to the control device 30 in this embodiment. Alternatively, an auxiliary storage device, such as a memory card, or an external communication device, such as a modem or a terminal adapter, may be connected. A controller 32 is an input means via which a player operates a game, and has various buttons. The input/output control device 30 periodically (for example, every 1/60 of a second) scans the operation states of the various buttons of the controller 32, and supplies a signal indicative of the scanning result to the CPU 14 via the bus 12. Based on the signal, the CPU 14 judges the player's game operation.

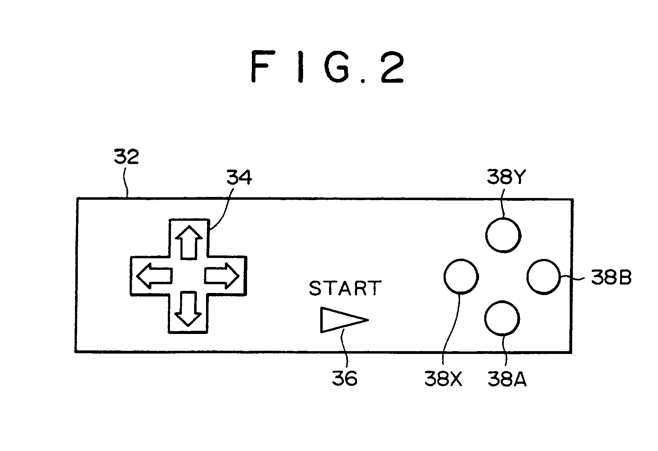

Fig. 2 is a diagram showing an example of the controller 32. The shown controller 32, generally used in various games, has buttons on the surface thereof, including a direction button 34, a start button 36, and buttons 38X, 38Y, 38A, 38B. The direction button 34 is a cross-shaped button generally used in designating a direction in which a character or a cursor moves. The start button 36 is a small, triangular press button generally used to either start or forcibly end a game. The buttons 38X, 38Y, 38A, 38B are generally used for other game operations.

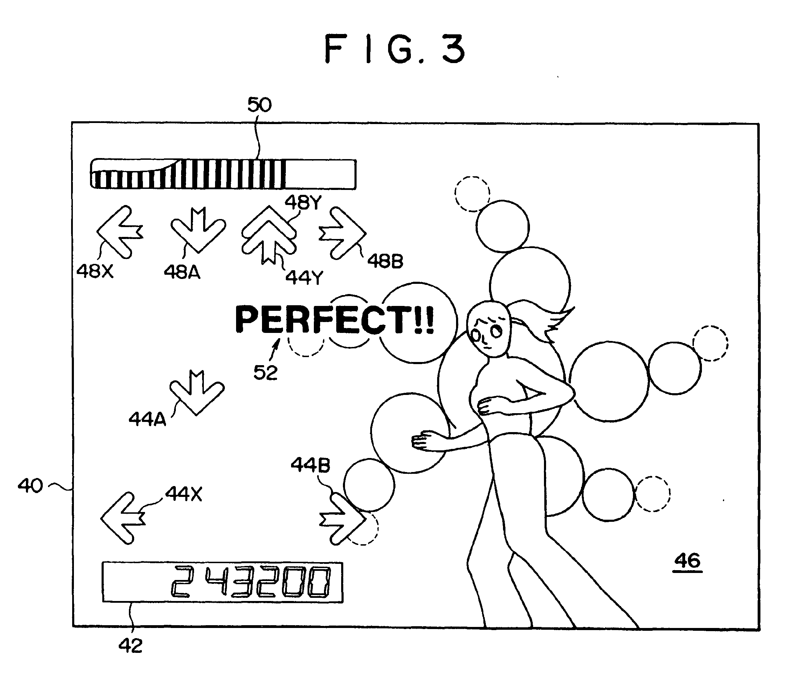

Fig. 3 is a diagram showing an example of a game screen image displayed in the monitor 18 based on a game program and game data read from the CD-ROM 25. As shown, a background image 46 is displayed over the entire game screen 40, and a dance gauge 50, reference arrows 48X, 48A, 48Y, 48B, timing guidance arrows 44X, 44A, 44Y, 44B, a score 42, and a message 52 are displayed superimposed thereupon. The score 42, which is shown on the left lowermost part in the game screen 40, indicates a score accumulated thus far. The message 52, which is shown in the left middle part in the screen, is made up of expressions evaluating the player's operation, such as "Great", "Perfect", "Good", "Boo", and so on.

The dance gauge 50, which is shown in the left uppermost part in the screen image, comprises a gauge bar which extends or contracts depending on the level of expertise of a game operation. Specifically, the gauge bar may extend to the right in response to a highly evaluated game operation, and contracts to the left in response to a poorly evaluated game operation. As a game will end soon after the gauge bar becomes shorter than a predetermined length, the player can know, by referring to the dance gauge 50, whether or not the game will end soon. Below the dance gauge 50 are shown reference arrows 48X, 48A, 48Y, 48B in this order, which serve as reference for the player to refer to ascertain operation timing.

That is, the arrow 48X is correlated with a button 38X and a leftward operation of the direction button 34. Similarly, the arrows 48A, 48Y, 48B are correlated with a button 38A and a downward operation of the direction button 34, with a button 38Y and an upward operation of the direction button 34, and with a button 38B and a rightward operation of the direction button 34, respectively. In a relatively large screen area below the reference arrows 48X, 48A, 48Y, 48B, timing guidance arrows 44X, 44A, 44Y, 44B are shown, which move upward as time elapses. A player can obtain a higher score by operating, at timings when the timing guidance arrows 44X, 44A, 44Y, or 44B overlap the reference arrows 48X, 48A, 48Y, or 48B, respectively, the direction button 34 in the corresponding directions or pressing the corresponding buttons 38X, 38A, 38Y, 38B. In the example of Fig. 3, where the timing guidance arrow 44Y is about to overlap the reference arrow 48Y, a player operating the controller 32 at a slightly later timing than the timing shown in the drawing by either pressing the button 38Y or operating the direction button 34 upward, would obtain a higher score.

It should be noted that a player does not always have to operate the controller 32 at a very exact timing when the timing guidance arrows 44X, 44A, 44Y, 44B fully overlap the corresponding reference arrows 48X, 48A, 48Y, 48B in order to get a score. A player can in fact get a score commensurate with the extent of overlapping. Note that the timing guidance arrows 44X, 44A, 44Y, 44B are displayed based on step data (described later).

The timing guidance arrows 44X, 44A, 44Y, 44B are specifically displayed as follows. That is, after the start of game music reproduction, the CPU 14 reads, from the step data, an operation timing within a guidance display range, and generates image data representing the timing guidance arrows 44X, 44A, 44Y, 44B based on the step data. Note that a guidance display range is a range determined here as covering two bars subsequent from the current moment. Image data is configured such that a timing guidance arrow relative to the closest operation timing is displayed in the uppermost part in the timing_guidance arrow display area, with those for relative far off operation timings displayed in lower parts accordingly.

In displaying the arrows, for example, the timing guidance arrow 44X, indicative of timing for a leftward operation of the direction button 34 and a pressing operation of the button 38X, is shown below the reference arrow 48X, associated with these operations. Similarly, a timing guidance arrow 44A, indicative of a timing for an downward operation of the direction button 34 and a pressing operation of the button 38A, is shown below the reference arrow 48A, associated with these operations, a timing guidance arrow 44Y, indicative of a timing for an upward operation of the direction button 34 and a pressing operation of the button 38Y, is shown below the reference arrow 48Y, associated with these operations, and a timing guidance arrow 44B, indicative of a timing for a rightward operation of the direction button 34 and a pressing operation of the button 38B, is shown below the reference arrow 48B, associated with these operations. It should be noted that, although a single timing guidance arrow 44X, 44A, 44Y, 44B is shown in a single column in this drawing, two or more timing guidance arrows 44X, 44A, 44Y, 44B may be shown at the same time in a single column depending on the approaching situation of operation timings. The thus generated image data is superimposed onto the background screen image 46, constituting a part of the game screen 40. The above processing will be repeated in a predetermined cycle.

The head of the guidance display range corresponds to the current play position in game music, and the guidance display range moves toward the end of the music by a predetermined amount for every processing cycle. Accordingly, the timing guidance arrows 44X, 44A, 44Y, 44B gradually move upward as the music progresses. With the timing guidance arrows 44X, 44A, 44Y, 44B displayed as described above, the player referring to the game screen 40 can easily anticipate the arrival of operation timing.

Next, data recorded in a CD-ROM 25 will be described. In order to play a music game using a home-use game machine 11, the CD-ROM 25 stores not only a game program, various game effect sound data, and various game image data, but also operating timing data and background image data, which are necessary for executing a game program, in a manner associated with each game music. Note that a part of the music recorded in a commercially available CD 23 is used as game music, as described above.

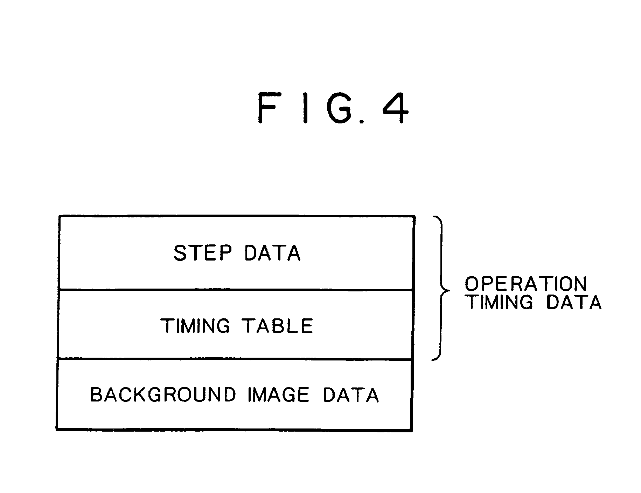

Fig. 4 is a diagram explaining operation timing data and background image data associated with some game music, recorded in a CD-ROM 25. As shown, operation timing data contains step data and a timing table. Step data defines a procedure for a player to follow in reproducing corresponding game music, and is configured according to the rhythm of the corresponding game music. Two or more sets of step data may be prepared for a single game music so that a desirable set of step data may be selected depending on a difficulty level, a play mode, and so on. Step data contains a plurality of data blocks each corresponding to each bar of a corresponding game music. Each data block contains information concerning which of the buttons of the controller 32 should be operated at which beat in a corresponding music block, with the bars being dissolved into the blocks according to a predetermined beat number such as four beats or eight beats.

A timing table is prepared for matching the timing of a corresponding game music with that of the step data. With reference to the timing table, the CPU 14 can specify step data corresponding to the current play position in the corresponding game music.

Background image data, either motion or still image data, is used for displaying a background image 46 in the game screen 40, shown, for example, in Fig. 3. A background image appropriate to the atmosphere of game music is selected for every game music to visually excite the player.

In the game device 10 in this preferred embodiment, a guidance is shown in the monitor 18 at a predetermining timing to thereby encourage the player to set a predetermined commercially available music CD 23 (commercially available music CDs titled as "XXX" consisting of two disks here) from the player's CD selection into the CD-ROM reader 24 of the home-use game machine 11. When the player responsive to the guidance sets a predetermined commercially available music CD 23 in the CD-ROM reader 24, the recorded content of the CD 23 is read, and music is reproduced as game music based on the read, recorded content, and output via the speaker 22. That is, the CD-ROM reader 24 reads music data from a commercially available music CD 23 in response to an instruction from the CPU 14, and directly, i.e., without passing through the bus 12, supplies the read music data to the SPU 20. The SPU 20 then converts the received music data into analogue data before supplying to the speaker 22.

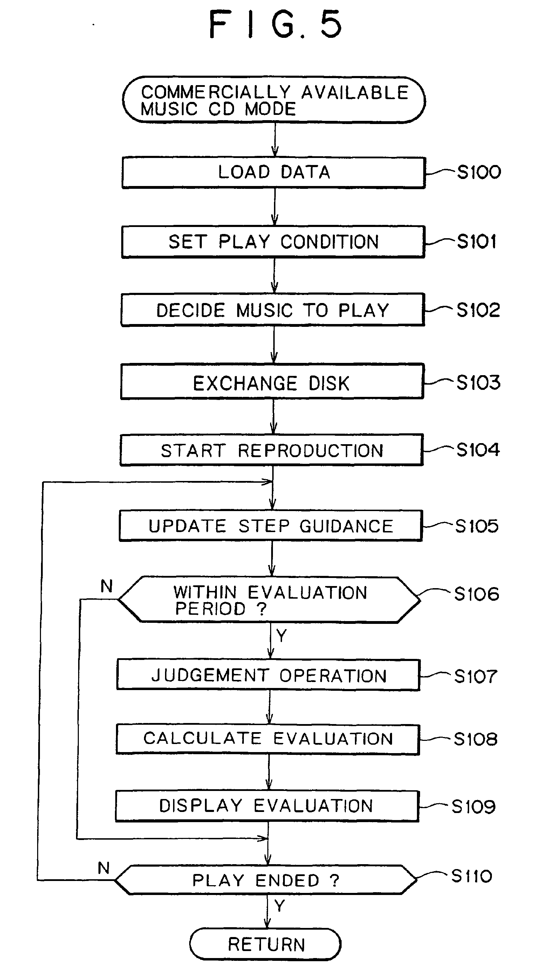

Next described is game program processing executed in the home-use game machine 11. Fig. 5 is a flowchart explaining major processing carried out in the home-use game machine 11 by executing a game program stored in the CD-ROM 25. That is, when the player sets a CD-ROM 25 in the CD-ROM reader 24 and turns on the home-use game machine 11, an operating system stored in the ROM 28 is executed, thereby starting various initial operations. During the initial operation, a part of the game program, necessary for the present processing, may be read from the CD-ROM 25 and loaded to the RAM 26. According to the game program loaded, a game title and so on is displayed in the monitor 18. Thereafter, a main menu is displayed either automatically or under control of the controller 32. When the player selects "commercially available music CD mode" in the menu, game processing in the commercially available music CD mode, which is a characteristic feature of the game device 10 of the present invention, is started.

In the game processing, operation timing data and background image data both corresponding to the music recorded in the commercially available music CD 23 are read from the CD-ROM 25, and loaded in the RAM 26. Moreover, of the game program and game data stored in the CD-ROM 25, all data necessary for playing the music recorded in the commercially available music CD 23 for use as game music is read, and loaded into the RAM 26 (S100). Then, a play condition setting menu is shown in the monitor 18, requiring the player to input the number of players (one or two), a difficulty level (a play condition), and so on (S101). The input play condition is loaded to the RAM 26. The CPU 14 then controls so as to display the titles of tunes which the game device 10 can play, among a plurality of tunes (music) recorded in the commercially available music CD 23, so as to encourage the player to select a desirable tune. A particular tune selected by the player using the controller 32 is determined as a tune for the current game (S102).

Then, disks are exchanged (S103). For disk exchange, guidance such as "Please inserts "XXX" DISC 1" may be shown in the monitor 18 to encourage the player to remove the CD-ROM 25 and to insert a commercially available music CD 23 containing the player's selected tune with respect to the CD-ROM reader 24. The CPU 14 monitors the cover (or a tray) of the CD-ROM reader 24 to see whether or not it is open. With the cover closed, the CPU 14 determines that the CD-ROM 25 containing the game program and game data remains in the CD-ROM reader 24, and controls so as to display an additional guidance, such as "Press button X to return". When the button 38X is pressed in response to the guidance, the state, for example, before the player's selection of the commercially available music CD mode is retrieved. With the cover (or a tray) of the CD-ROM reader 24 opened, on the other hand, the CPU 14 determines that the CD-ROM 25 containing the game program and game data has been removed with no additional guidance such as "Press button X to return" therefore displayed.

The CPU 14 further monitors the cover (or a tray) of the CD-ROM reader 24 to see if it is closed. When it is, the CPU 14 then determines whether the commercially available music CD 23, the CD-ROM 25, or nothing is set. In the case where nothing is set, a displayed guidance may read "Nothing read. Reset disk". With the CD-ROM 25 set, guidance may read "Wrong disk. Insert "XXX" DISC 1". With the commercially available music CD 23 set, TOC (Title of Contents) information is read from the commercially available music CD 23 set, and the read, recorded content (a total playing duration, the number of tunes, time to start each tune, and so on) is compared with data ready beforehand to see if they are the same. With this arrangement, whether or not the currently set disk is a predetermined commercially available music CD 23 can be determined. It should be noted that TOC information on a predetermined commercially available music CD 23 (commercially available music CDs titled as "XXX" consisting of two disks) is stored beforehand in the CD-ROM 25, and transferred to the RAM 26 at S100. Using the data transferred to the RAM 26, whether or not the commercially available music CD 23 set in the CD-ROM reader 24 is a desired commercially available music CD 23 is determined, as described above. If it is not, a guidance reading "Wrong disk. Insert "XXX" DISC 1" may be shown. On the other hand, if it is, reproduction and output of the music selected by the player at S102 is initiated (S104).

The CPU 14 then prepares image data for a step guidance as shown in Fig. 3, based on the step data out of the data loaded to the RAM 26 at S100, and outputs the prepared image data via the monitor 18 to update the step guidance (S105). Specifically, the CPU 14 refers to the timing table to judge correspondence between the step data and the original music data. Note that step data and the timing table corresponding to the tune selected at S102 are used here, and that a step guidance image in compliance with the predetermined play condition is used.

Subsequently, whether or not the current play position falls within an evaluation period is determined based on the current play position and the step data (S106). An evaluation period is a period during which the player's operation timing is compared with a corresponding timing defined by the step data. Specifically, an evaluation period is a period covering preceding and following predetermined time amounts with respect to a certain timing defined as operation timing according to the step data.

For a play position currently falling within an evaluation period, the current operation state of the controller 32 is scanned (S107), and the player's game operation is evaluated thereupon (S108). Here, step data indicates in which direction the direction button 34 should be operated or which of the buttons 38X, 38A, 38Y, or 38B should be pressed at the operation timing currently within the evaluation period. Therefore, whether or not a button operation which is to be evaluated at that timing is actually carried out is determined. Moreover, an amount of difference between the actual operation timing and the timing defined by the step data is also determined. A smaller difference in timing may get a higher evaluation. Specifically, the maximum score is given for no timing difference. Also, zero may be given for a maximum difference, and even a negative score may be given for a wrong operation of the direction button 34 or the button 38, or no operation registered. Note that when two or more operations of the direction button 34 or the button 38 must be evaluated at the same time, each button operation is similarly evaluated. The evaluation result is stored in the RAM 26. In addition, the last obtained score is added to the accumulated score, which is stored in the RAM 26, so that a total score is obtained. The total score is displayed as a score 42 (S109). Display State of the dance gauge 50 is accordingly updated. Specifically, the gauge bar extends to the right for a high evaluation, and contracts to the left for a low evaluation. Further, a message 52 according to the evaluation acquired at step S108 is shown on the game screen 40.

Thereafter, the CPU 14 determines whether or not the game play satisfies game end conditions (S110). For example, the game play will end when the total score fails to reach a predetermined threshold or when the player continuously presses the start button 36 of the controller 32 over a predetermined time period. When the game play end conditions are met, the player's entire game play performance is evaluated based on the content of the RAM 26, and the evaluation is displayed in the monitor 18. On the other hand, when the end conditions are not met, the process returns to S105. When the game play ends, guidance may be displayed, upon necessity, to encourage the player to return the CD-ROM 25 containing the original game program and game data to the CD-ROM reader 24.

According to the above-described game device 10, no modification with a commercially available music CD 23 is required for the player to enjoy the music stored therein, as game music.

It should be noted that the present invention is not limited to the above.

For example, whereas the present invention is applied to a home-use game machine 11 in the above, the present invention can be similarly applied to a business use game device (arcade game machine). In this case, preferably, a faster storage device than a CD-ROM 25 and a built-in monitor 18 and speaker 22 may be used.

Also, whereas music for use as game music is read from a commercially available music CD 23 in the above, music may be read from other commercially available music information storage medium, such as a DVD or a MD. Alternatively, music for use as game music may be obtained from a music data distribution server employed in various music data distribution services addressing individual homes via a communication network, such as the Internet, which are now widely discussed.

Further, whereas a CD-ROM 25 storing a game program and game data is used in a home-use game machine 11 in the above, any computer, such as a CD player-equipped personal computer, and so on, which has a function for reading the content of a commercially available music CD 23 and reproducing music based thereupon, may be usable.

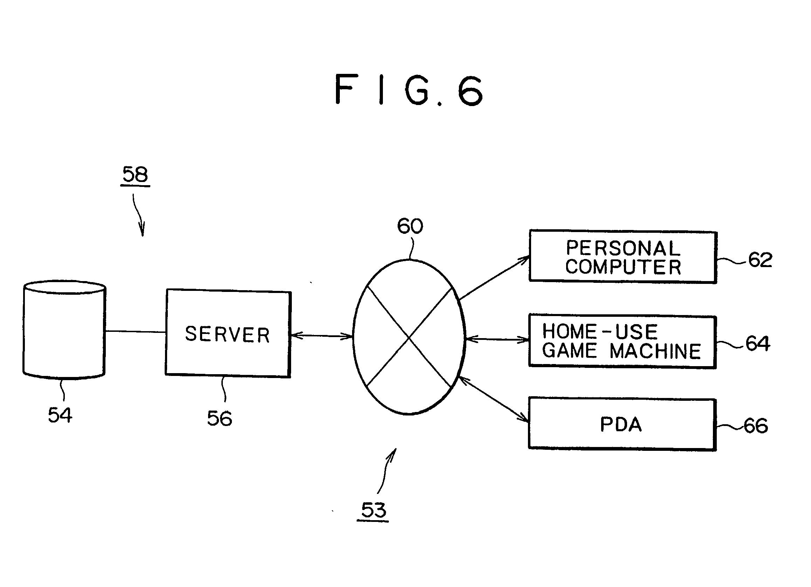

Still further, whereas a game program and game data are provided from a CD-ROM 25, or an information storage medium, to a home-use game machine 11 in the above, a game program and game data may be distributed through a communication network to each home. Fig. 6 is a diagram showing an overall structure of a game program distribution system utilizing a communication network. As shown, a game program distribution system 53 comprises a game database 54, a server 56, a communication network 60, a personal computer 62, a home-use game machine 64, and a PDA (Personal Digital Assistance) 66, wherein the game database 54 and the server 56 together constitute a game program distribution device 58. The communication network 60 may be, for example, the Internet or a cable television network. In this system, the game database 54 stores a game program and game data, similar to those stored in the CD-ROM 25. When a user makes a request for a game distribution, using the personal computer 62, the home-use game machine 64, the PDA 66, or the like, the request is forwarded to the server 56 via the communication network 60. In response to the request, the server 56 reads the game program and game data from the game database 54 and transfers them to the requesting entity, such as a personal computer, a home-use game machine 64, a PDA 66, or the like. Note that although a game distribution is effected in response to a game distribution request in the above, the server 56 may transmit them one-sidedly. Also, game program and game data necessary for playing a game may not necessarily be all distributed at the same time, and only those necessary for each aspect of the game may be distributed at an appropriate timing. With game distribution via a communication network 60 as described above, a demander can easily obtain a game program and game data necessary for playing music using a commercially available music CD 23.

## Claims

1. A game device (10) having a controller (32) operated by a player in accordance with game music, comprising:
music reproducing means (24) for reading recorded content from a music information storage medium (23) to reproduce music as game music based on the recorded content read;
judgement means (14) for reading recorded content from a music information storage medium (23) to judge whether or not the music information storage medium (23) is a predetermined music information storage medium (23) based on the recorded content read, wherein the judgement means (14) includes judgement data storage means (26,28), with the judgement means (14) being arranged to judge whether or not the music information storage medium (23) is a predetermined music information storage medium (23) by comparing the recorded content of the music information storage medium with information stored beforehand in the judgement data storage means (26,28);
operation timing data storage means (26,28) for storing operating timing data indicative of timings at which the player should operate the controller (32) in accordance with the game music reproduced based on the recorded content read from the predetermined music information storage medium; and
music game execution means for causing the music information storage medium reproducing means (24) to reproduce music as game music based on the recorded content read from the music information storage medium (23), in response to a judgment such that the music information storage medium (23), of which recorded content is read by the music judgment means (14), is the predetermined music information storage medium (23), and for guiding timings at which the player should operate the controller (32) in accordance with the game music reproduced, based on the operation timing data.

2. A game device (10) according to claim 1 wherein the music judgement means (14) includes judgement data storage means (26,28) for storing beforehand at least a part of the recorded content of the predetermined music information storage medium (23) as judgement data, and judges whether or not the music information storage medium (23), of which recorded content is read by the music judgement means (14), is the predetermined music information storage medium (23) by comparing the judgement data and the recorded content of the music information storage medium (23), read by the music judgement means.

3. A game device according to claim 2, wherein the music information storage medium is a music CD.

4. An information storage medium (28) storing game program code and game data for causing a computer to function as a game device having a controller (32) operated by a player in accordance with game music, the computer being equipped with a music information storage medium reproducing function (24) for reading recorded content from a music information storage medium to reproduce music based on the recorded content read, wherein
the information storage medium stores operation timing data, as at least a part of the game data, indicative of timings at which the player should operate the controller in accordance with the game music reproduced based on the recorded content read from a predetermined music information storage medium, and program code, as at least a part of the game program code, for causing the computer to function as;
music reproducing means (24) for reading recorded content from a music information storage medium to reproduce music as game music based on the recorded content read by using the music reproducing function;
judgement means (14) for reading recorded content from a music information storage medium (22) by using the music information storage medium reproducing function to judge whether or not the music information storage medium is the predetermined music information storage medium based on the recorded content read, wherein the judgement means (14) includes judgement data storage means (26,28), with the judgement means (14) being arranged to judge whether or not the music information storage medium (23) is a predetermined music information storage medium (23) by comparing the recorded content of the music information storage medium (23) with information stored beforehand in the judgement data storage means (26,28); and
music game execution means for causing the music reproducing means to reproduce music as game music based on the recorded content read from the music information storage medium, in response to a judgement such that the music information storage medium, of which recorded content is read by the music judgement means, is the predetermined music information storage medium, and for guiding timings at which the player should operate the controller in accordance with the game music reproduced, based on the operation timing data.

5. An information storage medium according to claim 4, wherein the music information storage medium is a music CD.

6. A method for controlling a game device equipped with a music CD reading and reproducing function and having a controller (32) operated by a player in accordance with game music, the method comprising:
a music CD reproducing step of reading recorded content from a music CD (23) to reproduce music as game music based on the recorded content read by using the commercially available music CD reproducing function;
a CD judgement step of reading recorded content from a music CD by using the music CD reproducing function to judge whether or not the music CD is a predetermined music CD based on the recorded content read, wherein the CD judgement step includes judging whether or not the music CD is a predetermined music CD by comparing the recorded content of the music CD with information stored beforehand;
an operation timing data obtaining step of obtaining operating timing data indicative of timings at which a player should operate the controller in accordance with the game music reproduced based on the recorded content read from the predetermined music CD; and a music game execution step of effecting reproduction of music as game music at the music CD reproducing step based on the recorded content read from the music CD, in response to a judgement such that the music CD, of which recorded content is read at the commercially available music CD reproducing step, is the predetermined music CD, and of guiding timings at which the player should operate the controller in accordance with the game music reproduced, based on the operation timing data.

7. A game distribution device for distributing game program code and game data for causing a computer to function as a game device having a controller (32) operated by a player in accordance with game music, the computer being equipped with a music CD reproducing function for reading recorded content from a music CD to reproduce music based on the recorded content read,
wherein
the game distribution device distributes operation timing data, as at least a part of the game data, indicative of timings at which the player should operate the controller in accordance with the game music reproduced based on the recorded content read from a predetermined music CD, and program code, as at least a part of the game program code, for causing the computer to function as
music CD reproducing means (24) for reading recorded content from a music CD (23) to reproduce music as game music based on the recorded content read by using the music CD reproducing function;
CD judgement means (14) for reading recorded content from a music CD (23) by using the music CD reproducing function to judge whether or not the music CD is the predetermined commercially available music CD based on the recorded content read, wherein the CD judgement means (14) includes judgement data storage means (26,28, with the CD judgement means (14) being arranged to judge whether or not the music CD (23) is a predetermined music CD (23) by comparing the recorded content of the music CD (23) with information stored beforehand in the judgement data storage means (26,28); and
music game execution means for causing the music CD reproducing means to reproduce music as game music based on the recorded content read from the music CD, in response to a judgement such that the music CD, of which recorded content is read by the commercially available music CD judgement means, is the predetermined music CD, and for guiding timings at which the player should operate the controller in accordance with the game music reproduced, based on the operation timing data.

8. A game distribution method for distributing game program code and game data for causing a computer to function as a game device having controller (32) operated by a player in accordance with game music, the computer being equipped with a music CD reproducing function for reading recorded content from a music CD to reproduce music based on the recorded content read, the method comprising:
an operation timing data distribution step of distributing operation timing data, as at least a part of the game data, indicative of timings at which the player should operate the controller in accordance with the game music reproduced based on the recorded content read from a predetermined music CD (23); and
a program distribution step of distributing program code, as at least a part of the game program code, for causing the computer to function as;
music CD reproducing means for reading recorded content from a music CD to reproduce music as game music based on the recorded content read by using the music CD reproducing function;
CD judgement means for reading recorded content from a music CD by using the music CD reproducing function to judge whether or not the music CD is the predetermined music CD based on the recorded content read, wherein the CD judgement means (14) includes judgement data storage means (26,28, with the CD judgement means (14) being arranged to judge whether or not the music CD (23) is a predetermined music CD (23) by comparing the recorded content of the music CD (23) with information stored beforehand in the judgement data storage means (26,28); and
music game execution means for causing the music CD reproducing means to reproduce music as game music based on the recorded content read from the music CD, in response to a judgement such that the music CD, of which recorded content is read by the music CD judgement means, is the predetermined CD, and for guiding timings at which the player should operate the controller in accordance with the game music reproduced, based on the operation timing data.

9. A game device having a controller (32) operated by a player in accordance with game music, comprising:
music data reproducing means for obtaining music data from a music data distribution server via a communication network to reproduce music as game music based on the music data obtained;
music data judgement means (14) for judging whether or not the music data obtained by the music data reproducing means is predetermined music data, wherein the music data judgement means (14) includes judgement data storage means (26,28), with the music data judgement means (14) being arranged to judge whether or not the music data (23) is a predetermined music data (23) by comparing the recorded content of the music data (23) with information stored beforehand in the music data judgement data storage means (26,28);operation timing data obtaining means for obtaining operation timing data indicative of timings at which the player should operate the controller in accordance with the game music reproduced based on the predetermined music data; and
music game execution means for causing the music data reproducing means to reproduce music as game music based on the music data, in response to a judgement such that the music data obtained by the music data reproducing means is the predetermined music data, and for guiding timings at which the player should operate the controller in accordance with the game music reproduced, based on the operation timing data.

10. An information storage medium storing game program code and game data for causing a computer to function as a game device having a controller (32) operated by a player in accordance with game music, wherein the information storage medium stores, as at least a part of the game program code, program code for causing the computer to function as;
music data reproducing means for obtaining music data from a music data distribution server via a communication network to reproduce music as game music based on the music data obtained;
music data judgement means (14) for judging whether or not the music data obtained by the music data reproducing means is predetermined music data, wherein the music data judgement means (14) includes judgement data storage means (26,28), with the music data judgement means (14) being arranged to judge whether or not the music data (23) is a predetermined music information storage medium (23) by comparing the recorded content of the music data (23) with information stored beforehand in the music data judgement means (26,28);
operation timing data obtaining means for obtaining operation timing data indicative of timings at which the player should operate the controller in accordance with the game music reproduced based on the predetermined music data; and
music game execution means for causing the music data reproducing means to reproduce music as game music based on the music data, in response to a judgement such that the music data obtained by the music data reproducing means is the predetermined music data, and for guiding timings at which the player should operate the controller in accordance with the game music reproduced, based on the operation timing data.

11. Game program code for causing a computer to function as a game device having a controller (32) operated by a player in accordance with game music, the computer being equipped with a commercially available music information storage medium reproducing function for reading recorded content from a commercially available music information storage medium recording at least music data, to reproduce music based on the recorded content read, the game program code for;
receiving operation timing data, as at least a part of the game data, indicative of timings at which the player should operate the controller in accordance with the game music reproduced based on the recorded content read from a predetermined commercially available music information storage medium;
reading recorded content from a commercially available music information storage medium (23) to reproduce music as game music based on the recorded content read by using the commercially available music information storage medium reproducing function;
reading recorded content from a commercially available music information storage medium by using the commercially available music information storage medium reproducing function;
judging whether or not the commercially available music information storage medium is the predetermined commercially available music information storage medium by comparing the recorded content of the music information storage medium with information stored beforehand; and causing the commercially available music information storage medium reproducing function to reproduce music as game music based on the recorded content read from the commercially available music information storage medium, in response to a judgment such that the commercially available music information storage medium is the predetermined commercially available music information storage medium; and
guiding timings at which the player should operate the controller in accordance with the game music reproduced, based on the operation timing data.

## Patentansprüche

1. Spielevorrichtung (10) mit einer Steuer/Regeleinrichtung (32), welche durch einen Spieler nach Maßgabe von Spielemusik betätigt wird, umfassend:
Musikwiedergabemittel (24) zum Lesen von gespeichertem Inhalt von einem Musikinformationsspeichermedium (20), um Musik als Spielemusik auf Grundlage des gelesenen gespeicherten Inhalts wiederzugeben;
Beurteilungsmittel (14) zum Lesen gespeicherten Inhalts von einem Musikinformationsspeichermedium (23), um auf Grundlage des gelesenen gespeicherten Inhalts zu beurteilen, ob das Musikinformationsspeichermedium (23) ein vorbestimmtes Musikinformationsspeichermedium (23) ist oder nicht, wobei das Beurteilungsmittel (14) Beurteilungsdatenspeichermittel (26,28) umfasst, wobei das Beurteilungsmittel (14) vorgesehen ist, um zu beurteilen, ob das Musikinformationsspeichermedium (23) ein vorbestimmtes Musikinformationsspeichermedium (23) ist oder nicht, indem es den gespeicherten Inhalt des Musikinformationsspeichermediums mit Information vergleicht, welche zuvor in dem Beurteilungsdatenspeichermittel (26,28) gespeichert wurde; Betriebszeitsteuerungsdatenspeichermittel (26, 28) zum Speichern von Betriebszeitsteuerungsdaten, welche Zeitsteuerungen anzeigen, bei welchen der Spieler die Steuer/Regeleinrichtung (32) betätigen sollte, und zwar nach Maßgabe der Spielemusik, welche auf Grundlage des aufgezeichneten Inhalts wiedergegeben wird, der aus dem vorbestimmten Musikinformationsspeichermedium gelesen wird; und
Musikspielausführungsmittel, um zu bewirken, dass das Musikinformationsspeichermediumwiedergabemittel (24) Musik als Spielemusik auf Grundlage des aus dem Musikinformationsspeichermedium (23) gelesenen aufgezeichneten Inhaltes wiedergibt, und zwar in Antwort auf eine Beurteilung derart, dass das Musikinformationsspeichermedium (23), von welchem aufgezeichneter Inhalt durch das Musikbeurteilungsmittel (14) gelesen wird, das bestimmte Musikinformationsspeichermedium (23) ist, und um Zeitsteuerungen zu führen, bei welchem der Spieler die Steuer/Regeleinrichtung (32) betätigen sollte, und zwar nach Maßgabe der wiedergegebenen Spielemusik, auf Grundlage der Betätigungszeitsteuerungsdaten.

2. Spielevorrichtung (10) nach Anspruch 1, bei welcher das Musikbeurteilungsmittel (14) Beurteilungsdatenspeichermittel (26, 28) umfasst, um wenigstens einen Teil des aufgezeichneten Inhalts des vorbestimmten Musikinformationsspeichermediums (23) zuvor als Beurteilungsdaten zu speichern, und beurteilt, ob das Musikinformationsspeichermedium (23), von welchem aufgezeichneter Inhalt durch das Musikbeurteilungsmittel (14) gelesen wird, das vorbestimmte Musikinformationsspeichermedium (23) ist oder nicht, indem es die Beurteilungsdaten und den aufgezeichneten Inhalt des Musikinformationsspeichermediums (23) vergleicht, welche durch das Musikbeurteilungsmittel gelesen werden.

3. Spieleverrichtung nach Anspruch 2, bei welcher das Musikinformationsspeichermedium eine Musik-CD ist.

4. Informationsspeichermedium (28), welches einen Spieleprogrammcode und Spieledaten speichert, um zu bewirken, dass ein Computer als eine Spielevorrichtung funktioniert, mit einer Steuer/Regeleinrichtung (32), welche durch einen Spieler nach Maßgabe von Spielemusik betätigt wird, wobei der Computer ausgestattet ist mit einer Musikinformationsspeichermediumwiedergabefunktion (24), um aufgezeichneten Inhalt von einem Musikinformationsspeichermedium zu lesen, um Musik auf Grundlage des gelesenen aufgezeichneten Inhalts wiederzugeben, wobei das Informationsspeichermedium Betätigungszeitsteuerungsdaten speichert, als wenigstens ein Teil der Spieledaten, welche Zeitsteuerungen anzeigen, bei welchen der Spieler die Steuer/Regeleinrichtung betätigen sollte, und zwar nach Maßgabe der Spielemusik, welche auf der Grundlage des von einem vorbestimmten Musikinformationsspeichermedium gelesenen aufgezeichneten Inhalts wiedergegeben wird, und Programmcode speichert, als wenigstens ein Teil des Spieleprogrammcodes, um zu bewirken, dass der Computer funktioniert als:
Musikwiedergabemittel (24) zum Lesen von aufgezeichnetem Inhalt von einem Musikinformationsspeichermedium, um Musik als Spielemusik auf Grundlage des gelesenen aufgezeichneten Inhalts unter Verwendung der Musikwiedergabefunktion wiederzugeben;
Beurteilungsmittel (14) zum Lesen von aufgezeichnetem Inhalt von einem Musikinformationsspeichermedium (22) unter Verwendung der Musikinformationsspeichermediumwiedergabefunktion, um auf Grundlage des gelesenen aufgezeichneten Inhalts zu beurteilen, ob das Musikinformationsspeichermedium das vorbestimmte Musikinformationsspeichermedium ist, wobei das Beurteilungsmittel (14) Beurteilungsdatenspeichermittel (26, 28) umfasst, wobei das Beurteilungsmittel (14) angeordnet ist, um zu beurteilen, ob das Musikinformationsspeichermedium (23) ein vorbestimmtes Musikinformationsspeichermedium (23) ist oder nicht, indem der aufgezeichnete Inhalt des Musikinformationsspeichermediums (23) mit Informationen verglichen wird, welche zuvor in dem Beurteilungsdatenspeichermittel (26, 28) gespeichert wurden; und
Musikspielausführungsmittel, um zu bewirken, dass das Musikwiedergabemittel Musik als Spielemusik auf Grundlage des von dem Musikinformationsspeichermedium gelesenen aufgezeichneten Inhaltes wiedergibt, und zwar in Antwort auf eine Beurteilung derart, dass das Musikinformationsspeichermedium, von welchem aufgezeichneter Inhalt durch das Musikbeurteilungsmittel gelesen wird, das vorbestimmte Musikinformationsspeichermedium ist, sowie zum Führen von Zeitsteuerungen, bei welchem der Spieler die Steuer/Regeleinrichtung betätigen sollte, und zwar nach Maßgabe der wiedergegebenen Spielemusik, auf Grundlage der Betätigungszeitsteuerungsdaten.

5. lnformationsspeichermedium nach Anspruch 4, bei welchem das Musikinformationsspeichermedium eine Musik-CD ist.

6. Verfahren zum Steuern/Regeln einer Spielevorrichtung, welche mit einer Musik-CD-Lese- und -Wiedergabefunktion ausgestattet ist und eine durch einen Spieler nach Maßgabe von Spielemusik betätigte Steuer/Regeleinrichtung (32) umfasst, wobei das Verfahren umfasst:
einen Musik-CD-Wiedergabeschritt eines Lesens von aufgezeichnetem Inhalt von einer Musik-CD (23), um Musik als Spielemusik auf Grundlage des gelesenen aufgezeichneten Inhalts unter Verwendung der im Handel erhältlichen Musik-CD-Wiedergabefunktion wiederzugeben;
einen CD-Beurteilungsschritt eines Lesens von aufgezeichnetem Inhalt von einer Musik-CD unter Verwendung der Musik-CD-Wiedergabefunktion, um zu beurteilen, ob die Musik-CD eine vorbestimmte Musik-CD ist oder nicht, und zwar auf Grundlage des gelesenen aufgezeichneten Inhalts, wobei der CD-Beurteilungsschritt ein Beurteilen umfasst, ob die Musik-CD eine vorbestimmte Musik-CD ist oder nicht, indem der aufgezeichnete Inhalt der Musik-CD mit zuvor gespeicherten Informationen verglichen wird;
einen Betätigungszeitsteuerungsdatenerhalteschritt eines Erhaltens von Betätigungszeitsteuerungsdaten, welche Zeitsteuerungen anzeigen, bei welchen ein Spieler die Steuer/Regeleinrichtung nach Maßgabe der auf Grundlage des von der vorbestimmten Musik-CD gelesenen aufgezeichneten Inhalts wiedergegebenen Spielemusik betätigen sollte; sowie einen Musikspielausführungsschritt eines bewirken seiner Wiedergabe von Musik als Spielemusik bei dem Musik-CD-Wiedergabeschritt auf Grundlage des von der Musik-CD gelesenen aufgezeichneten Inhalts, in Antwort auf eine Beurteilung derart, dass die Musik-CD, von welcher bei dem im Handel erhältlichen Musik-CD-Wiedergabeschritt aufgezeichneter Inhalt gelesen wird, die vorbestimmte Musik-CD ist, sowie eines Führens von Zeitsteuerungen, bei welchen der Spieler die Steuer/Regeleinrichtung nach Maßgabe der wiedergegebenen Spielemusik, auf Grundlage der Betätigungszeitsteuerungsdaten betätigen sollte.

7. Spieleverteilungsvorrichtung zum Verteilen eines Spieleprogrammcodes und von Spieledaten, um zu bewirken, dass ein Computer als eine Spielevorrichtung funktioniert mit einer Steuer/Regeleinrichtung (32), welche durch einen Spieler nach Maßgabe von Spielemusik betätigt wird, wobei der Computer ausgestattet ist mit einer Musik-CD-Wiedergabefunktion, um aufgezeichneten Inhalt von einer Musik-CD zu lesen, um Musik auf Grundlage des gelesenen aufgezeichneten Inhalts wiederzugeben, wobei
die Spieleverteilungsvorrichtung Betätigungszeitsteuerungsdaten verteilt, als wenigstens einen Teil der Spieledaten, welche Zeitsteuerungen anzeigen, bei welchen der Spieler die Steuer/Regelvorrichtung nach Maßgabe der auf Grundlage des von einer vorbestimmten Musik-CD gelesenen aufgezeichneten Inhalts wiedergegebenen Spielemusik betätigen sollte, sowie Programmcode verteilt, als wenigstens einen Teil des Spieleprogrammcodes, um zu bewirken, das der Computer funktioniert als
Musik-CD-Wiedergabemittel (24) zum Lesen von aufgezeichnetem Inhalt von einer Musik-CD (23), um Musik als Spielemusik auf Grundlage des gelesenen aufgezeichneten Inhalts unter Verwendung der Musik-CD-Wiedergabefunktion wiederzugeben;
CD-Beurteilungsmittel (14) zum Lesen von aufgezeichnetem Inhalt von einer Musik-CD (23) unter Verwendung der Musik-CD-Wiedergabefunktion, um auf Grundlage des gelesenen aufgezeichneten Inhalts zu beurteilen, ob die Musik-CD die vorbestimmte im Handel erhältliche Musik-CD ist, wobei das CD-Beurteilungsmittel (14) Beurteilungsdatenspeichermittel (26, 28) umfasst, wobei das CD-Beurteilungsmittel (14) angeordnet ist, um zu beurteilen, ob die Musik-CD (23) eine vorbestimmte Musik-CD (23) ist oder nicht, indem der aufgezeichnete Inhalt der Musik-CD (23) mit Informationen verglichen wird, welche zuvor in dem Beurteilungsdatenspeichermittel (26, 28) gespeichert wurden; und
Musikspielausführungsmittel um zu bewirken, dass das Musik-CD-Wiedergabemittel Musik als Spielemusik auf Grundlage des von der Musik-CD gelesenen aufgezeichneten Inhaltes wiedergibt, und zwar in Antwort auf eine Beurteilung derart, dass die Musik-CD, von welcher aufgezeichneter Inhalt durch das im Handel erhältliche Musik-CD-Beurteilungsmittel gelesen wird, die vorbestimmte Musik-CD ist, sowie zum Führen von Zeitsteuerungen, bei welchem der Spieler die Steuer/Regeleinrichtung betätigen sollte, und zwar nach Maßgabe der wiedergegebenen Spielemusik, auf Grundlage der Betätigungszeitsteuerungsdaten.

8. Spieleverteilungsvorrichtung zum Verteilen von Spieleprogrammcode und Spieledaten, um zu bewirken, das ein Computer als eine Spielevorrichtung funktioniert, mit einer Steuer/Regeleinrichtung (32), welche durch einen Spieler nach Maßgabe von Spielemusik betätigt wird, wobei der Computer versehen ist mit einer Musik-CD-Wiedergabefunktionen zum Lesen von aufgezeichnetem Inhalt von einer Musik-CD, um Musik auf Grundlage des gelesenen aufgezeichneten Inhalts wiederzugeben, wobei das Verfahren umfasst:
einen Betätigungszeitsteuerungsdatenverteilungschritt eines verteilen von Betätigungszeitsteuerungsdaten, als wenigstens ein Teil der Spieledaten, welche Zeitsteuerungen anzeigen, bei welchen der Spieler die Steuer/Regelvorrichtung nach Maßgabe der auf Grundlage des von einer vorbestimmten Musik-CD (23) gelesenen aufgezeichneten Inhalts wiedergegebenen Spielemusik betätigen sollte; und
einen Programmverteilungsschritt eines Verteilens von Programmcode, als wenigstens einen Teil des Spieleprogrammcodes, um zu bewirken, das der Computer funktioniert als:
Musik-CD-Wiedergabemittel zum Lesen von aufgezeichnetem Inhalt von einer Musik-CD, um Musik als Spielemusik auf Grundlage des gelesenen aufgezeichneten Inhalts unter Verwendung der Musik-CD-Wiedergabefunktion wiederzugeben;
CD-Beurteilungsmittel zum Lesen von aufgezeichnetem Inhalt von einer Musik-CD unter Verwendung der Musik-CD-Wiedergabefunktion, um auf Grundlage des gelesenen aufgezeichneten Inhalts zu beurteilen, ob die Musik-CD die vorbestimmte Musik-CD ist, wobei das CD-Beurteilungsmittel (14) Beurteilungsdatenspeichermittel (26, 28) umfasst, wobei das CD-Beurteilungsmittel (14) angeordnet ist, um zu beurteilen, ob die Musik-CD (23) eine vorbestimmte Musik-CD (23) ist oder nicht, indem der aufgezeichnete Inhalt der Musik-CD (23) mit Information verglichen wird, welche zuvor in dem Beurteilungsdatenspeichermittel (26, 28) gespeichert wurde; und
Musikspielausführungsmittel um zu bewirken, dass das Musik-CD-Wiedergabemittel Musik als Spielemusik auf Grundlage des von der Musik-CD gelesenen aufgezeichneten Inhaltes wiedergibt, und zwar in Antwort auf eine Beurteilung derart, dass die Musik-CD, von welcher aufgezeichneter Inhalt durch das Musik-CD-Beurteilungsmittel gelesen wird, die vorbestimmte Musik-CD ist, sowie zum Führen von Zeitsteuerungen, bei welchem der Spieler die Steuer/Regeleinrichtung betätigen sollte, und zwar nach Maßgabe der wiedergegebenen Spielemusik, auf Grundlage der Betätigungszeitsteuerungsdaten.

9. Spielevorrichtung mit einer Steuer/Regeleinrichtung (32), welche durch einen Spieler nach Maßgabe von Spielemusik betätigt wird, umfassend:
Musikdatenwiedergabemittel zum Erhalten von Musikdaten von einem Musikdatenverteilungsserver über ein Kommunikationsnetzwerk, um Musik als Spielemusik auf Grundlage der erhaltenen Musikdaten wiederzugeben; Musikdatenbeurteilungsmittel (14) zum Beurteilen, ob die durch das Musikdatenwiedergabemittel erhaltenen Musikdaten vorbestimmte Musikdaten sind oder nicht, wobei das Musikdatenbeurteilungsmittel (14) Beurteilungsdatenspeichermittel (26, 28) umfasst, wobei das Musikdatenbeurteilungsmittel (14) dazu angeordnet ist, zu beurteilen, ob die Musikdaten (23) die vorbestimmte Musikdaten (23) sind oder nicht, indem der aufgezeichnete Inhalt der Musikdaten (23) mit Informationen verglichen werden, welche zuvor in dem Musikdatenbeurteilungsdatenspeichermittel (26, 28) gespeichert wurden;
Betätigungszeitsteuerungsdatenerhaltemittel zum Erhalten von Betätigungszeitsteuerungsdaten, welche Zeitsteuerungen anzeigen, bei welchen der Spieler die Steuer/Regeleinrichtung nach Maßgabe der auf Grundlage der vorbestimmten Musikdaten wiedergegebenen Spielemusik betätigen sollte; und
Musikspielausführungsmittel, um zu bewirken, dass das Musikdatenwiedergabemittel Musik als Spielemusik auf Grundlage der Musikdaten wiedergibt, und zwar in Antwort auf eine Beurteilung derart, dass die Musikdaten, welche durch das Musikdatenwiedergabemittel erhalten wurden, die vorbestimmten Musikdaten sind, sowie zum Führen von Zeitsteuerungen, bei welchem der Spieler die Steuer/Regeleinrichtung betätigen sollte, und zwar nach Maßgabe der wiedergegebenen Spielemusik, auf Grundlage der Betätigungszeitsteuerungsdaten.

10. Informationsspeichermedium, welches Spieleprogrammcode und Spieledaten speichert, um zu bewirken, dass ein Computer als eine Spielevorrichtung mit einer Steuer/Regeleinrichtung (32) funktioniert, welche durch einen Spieler nach Maßgabe von Spielemusik betätigt wird, wobei das Informationsspeichermedium, als wenigstens ein Teil des Spieleprogrammcodes, Programmcode speichert, um zu bewirken, dass der Computer funktioniert als;
Musikdatenwiedergabemittel zum Erhalten von Musikdaten von einem Musikdatenverteilungsserver über ein Kommunikationsnetzwerk, um Musik als Spielemusik auf Grundlage der erhaltenen Musikdaten wiederzugeben; Musikdatenbeurteilungsmittel (14) zum Beurteilen, ob die durch das Musikdatenwiedergabemittel erhaltenen Musikdaten vorbestimmte Musikdaten sind oder nicht, wobei das Musikdatenbeurteilungsmittel (14) Beurteilungsdatenspeichermittel (26, 28) umfasst, wobei das Musikdatenbeurteilungsmittel (14) dazu angeordnet ist, zu beurteilen, ob die Musikdaten (23) ein vorbestimmtes Musikinformationsspeichermedium (23) ist oder nicht, indem der aufgezeichnete Inhalt der Musikdaten (23) mit Informationen verglichen werden, welche zuvor in dem Musikdatenbeurteilungsdatenspeichermittel (26, 28) gespeichert wurden; Betätigungszeitsteuerungsdatenerhaltemittel zum Erhalten von Betätigungszeitsteuerungsdaten, welche Zeitsteuerungen anzeigen, bei welchen der Spieler die Steuer/Regeleinrichtung nach Maßgabe der auf Grundlage der vorbestimmten Musikdaten wiedergegebenen Spielemusik betätigen sollte; und
Musikspielausführungsmittel, um zu bewirken, dass das Musikdatenwiedergabemittel Musik als Spielemusik auf Grundlage der Musikdaten wiedergibt, und zwar in Antwort auf eine Beurteilung derart, dass die Musikdaten, welche durch das Musikdatenwiedergabemittel erhalten wurden, die vorbestimmten Musikdaten sind, sowie zum Führen von Zeitsteuerungen, bei welchem der Spieler die Steuer/Regeleinrichtung betätigen sollte, und zwar nach Maßgabe der wiedergegebenen Spielemusik, auf Grundlage der Betätigungszeitsteuerungsdaten.

11. Spieleprogrammcode, um zu bewirken, dass ein Computer als eine Spielevorrichtung mit einer Steuer/Regeleinrichtung darauf 32) funktioniert, welche durch einen Spieler nach Maßgabe von Spielemusik betätigt wird, wobei der Computer versehen ist mit einer im Handel erhältlichen Musikinformationsspeichermediumwiedergabefunktion zum Lesen von aufgezeichnetem Inhalt von einem im Handel erhältlichen Musikinformationsspeichermedium, welches wenigstens Musikdaten aufzeichnet, um Musik auf Grundlage des gelesenen aufgezeichneten Inhalts wiederzugeben, wobei der Spieleprogrammcode dazu dient; Betätigungszeitsteuerungsdaten zu erhalten, als wenigstens ein Teil der Spieledaten, welche Zeitsteuerungen anzeigen, bei welchen der Spieler die Steuer/Regeleinrichtung nach Maßgabe der auf der Grundlage des von einem vorbestimmten im Handel erhältlichen Musikinformationsspeichermedium gelesenen aufgezeichneten Inhalts wiedergegebenen Musik betätigen sollte;
aufgezeichneten Inhalt von einem im Handel erhältlichen Musikinformationsspeichermedium (23) zu lesen, um Musik als Spielemusik auf Grundlage des gelesenen aufgezeichneten Inhalts unter Verwendung der Funktion zur Wiedergabe des im Handel erhältlichen Musikinformationsspeichermediums wiederzugeben;
zu beurteilen, ob das im Handel erhältliche Musikinformationsspeichermedium das vorbestimmte im Handel erhältliche Musikinformationsspeichermedium ist oder nicht, indem der aufgezeichnete Inhalt des Musikinformationsspeichermediums mit zuvor gespeicherten Informationen verglichen wird; und
zu bewirken, dass die Funktion zur Wiedergabe des im Handel erhältlichen Musikinformationsspeichermediums Musik als Spielemusik auf Grundlage des von dem im Handel erhältlichen Musikinformationsspeichermedium gelesenen aufgezeichneten Inhalts wiedergibt, und zwar in Antwort auf eine Beurteilung derart, dass das im Handel erhältliche Musikinformationsspeichermedium das vorbestimmte im Handel erhältliche Musikinformationsspeichermedium ist; und
Zeitsteuerungen zu führen, bei welchen der Spieler die Steuer/Regeleinrichtung nach Maßgabe der wiedergegebenen Spielemusik auf Grundlage der Betätigungszeitsteuerungsdaten betätigen sollte.

## Revendications

1. Dispositif de jeu (10) comportant un contrôleur (32) actionné par un joueur conformément à la musique du jeu, comprenant :
un moyen de reproduction de musique (24) destiné à lire le contenu enregistré à partir d'un support de mémorisation d'informations de musique (23) pour reproduire la musique en tant que musique du jeu sur la base du contenu enregistré lu ;
un moyen d'évaluation (14) destiné à lire le contenu enregistré à partir d'un support de mémorisation d'informations de musique (23) pour évaluer si le support de mémorisation d'informations de musique est ou non un support de mémorisation d'informations de musique prédéterminé (23) sur la base du contenu enregistré lu, dans lequel le moyen d'évaluation (14) comprend un moyen de mémorisation de données d'évaluation (26, 28), le moyen d'évaluation (14) étant conçu pour évaluer si le support de mémorisation d'informations de musique (23) est ou non un support de mémorisation d'informations de musique prédéterminé (23) en comparant le contenu enregistré du support de mémorisation d'informations de musique à des informations mémorisées à l'avance dans le moyen de mémorisation de données d'évaluation (26, 28) ;
un moyen de mémorisation d'instants d'actionnement (26, 28) destiné à mémoriser des données d'instants d'actionnement indiquant les instants auxquels le joueur doit actionner le contrôleur (32) conformément à la musique du jeu reproduite sur la base du contenu enregistré lu à partir du support de mémorisation d'informations de musique prédéterminé ; et
un moyen d'exécution de jeu musical destiné à amener le moyen de reproduction de support de mémorisation d'informations de musique (24) à reproduire la musique en tant que musique du jeu sur la base du contenu enregistré lu à partir du support de mémorisation d'informations de musique (23), en réponse à une évaluation telle que le support de mémorisation d'informations de musique (23), dont le contenu enregistré est lu par le moyen d'évaluation de musique (14), est le support de mémorisation d'informations de musique prédéterminé (23), et destiné à indiquer les instants auxquels le joueur doit actionner le contrôleur (32) conformément à la musique de jeu reproduite, sur la base des données d'instants d'actionnement.

2. Dispositif de jeu (10) selon la revendication 1, dans lequel le moyen d'évaluation de musique (14) comprend un moyen de mémorisation de données d'évaluation (26, 28) destiné à mémoriser à l'avance au moins une partie du contenu enregistré du support de mémorisation d'informations de musique prédéterminé (23) en tant que données d'évaluation, et évalue si le support de mémorisation d'informations de musique (23), dont le contenu enregistré est lu par le moyen d'évaluation de musique (14), est ou non le support de mémorisation d'informations de musique prédéterminé (23) en comparant les données d'évaluation et le contenu enregistré du support de mémorisation d'informations de musique (23), lu par le moyen d'évaluation de musique.

3. Dispositif de jeu selon la revendication 2, dans lequel le support de mémorisation d'informations de musique est un disque CD musical.

4. Support de mémorisation d'informations (28) mémorisant un code de programme de jeu et des données de jeu pour amener un ordinateur à fonctionner comme un dispositif de jeu comportant un contrôleur (32) actionné par un joueur conformément à la musique du jeu, l'ordinateur étant équipé d'une fonction de reproduction (24) de support de mémorisation d'informations de musique destinée à lire le contenu enregistré à partir d'un support de mémorisation d'informations de musique pour reproduire la musique sur la base du contenu enregistré lu, où
le support de mémorisation d'informations mémorise des données d'instants d'actionnement, en tant qu'au moins une partie des données de jeu, indiquant les instants auxquels le joueur devrait actionner le contrôleur conformément à la musique de jeu reproduite sur la base du contenu enregistré lu à partir d'un support de mémorisation d'informations de musique prédéterminé, et un code de programme, en tant qu'au moins une partie du code de programme de jeu, afin d'amener l'ordinateur à fonctionner en tant que :
un moyen de reproduction de musique (24) destiné à lire un contenu enregistré à partir d'un support de mémorisation d'informations de musique pour reproduire la musique en tant que musique de jeu sur la base du contenu enregistré lu en utilisant la fonction de reproduction de musique ;
un moyen d'évaluation (14) destiné à lire un contenu enregistré à partir d'un support de mémorisation d'informations de musique (22) en utilisant la fonction de reproduction de support de mémorisation d'informations de musique pour évaluer si le support de mémorisation d'informations de musique est ou non le support de mémorisation d'informations de musique prédéterminé sur la base du contenu enregistré lu, où le moyen d'évaluation (14) comprend un moyen de mémorisation de données d'évaluation (26, 28), le moyen d'évaluation (14) étant agencé pour évaluer si le support de mémorisation d'informations de musique (23) est ou non un support de mémorisation d'informations de musique prédéterminé (23) en comparant le contenu enregistré du support de mémorisation d'informations de musique (23) avec des informations mémorisées à l'avance dans le moyen de mémorisation de données d'évaluation (26, 28) ; et
un moyen d'exécution de jeu musical destiné à amener le moyen de reproduction de musique à reproduire la musique en tant que musique de jeu sur la base du contenu enregistré lu à partir du support de mémorisation d'informations de musique, en réponse à une évaluation telle que le support de mémorisation d'informations de musique, dont le contenu enregistré est lu par le moyen d'évaluation de musique, est le support de mémorisation d'informations de musique prédéterminé, et destiné à indiquer les instants auxquels le joueur doit actionner le contrôleur conformément à la musique de jeu reproduite, sur la base des données d'instants d'actionnement.

5. Support de mémorisation d'informations selon la revendication 4, dans lequel le support de mémorisation d'informations de musique est un disque CD musical.

6. Procédé destiné à commander un dispositif de jeu équipé d'une fonction de lecture et de reproduction de disque CD musical,et comportant un contrôleur (32) actionné par un joueur conformément à la musique du jeu, le procédé comprenant :
une étape de reproduction de disque CD musical consistant à lire un contenu enregistré à partir d'un disque CD musical (23) pour reproduire la musique en tant que musique de jeu sur la base du contenu enregistré lu en utilisant la fonction de reproduction de disque CD musical disponible dans le commerce ;
une étape d'évaluation de disque CD consistant à lire le contenu enregistré à partir d'un disque CD musical en utilisant la fonction de reproduction de disque CD musical pour évaluer si le disque CD musical est ou non un disque CD musical prédéterminé sur la base du contenu enregistré lu, où l'étape d'évaluation de disque CD comprend l'évaluation du fait que le disque CD musical est ou non un disque CD musical prédéterminé en comparant le contenu enregistré du disque CD musical à des informations mémorisées à l'avance ;
une étape d'obtention de données d'instants d'actionnement consistant à obtenir des données d'instants d'actionnement indiquant les instants auxquels un joueur doit actionner le contrôleur conformément à la musique du jeu reproduite sur la base du contenu enregistré lu à partir du disque CD musical prédéterminé ; et une étape d'exécution de jeu musical consistant à effectuer la reproduction d'une musique en tant que musique du jeu à l'étape de reproduction de disque CD musical sur la base du contenu enregistré lu à partir du disque CD musical, en réponse à une évaluation telle que le disque CD musical, dont le contenu enregistré est lu à l'étape de reproduction de disque CD musical disponible dans le commerce, est le disque CD musical prédéterminé, et consistant à indiquer les instants auxquels le joueur doit actionner le contrôleur conformément à la musique du jeu reproduite, sur la base des données d'instants d'actionnement.

7. Dispositif de distribution de jeu destiné à distribuer un code de programme de jeu et des données de jeu pour amener un ordinateur à fonctionner comme un dispositif de jeu comportant un contrôleur (32) actionné par un joueur conformément à la musique du jeu, l'ordinateur étant équipé d'une fonction de reproduction de disque CD musical pour lire le contenu enregistré à partir d'un disque CD musical afin de reproduire la musique sur la base du contenu enregistré lu,
dans lequel
le dispositif de distribution de jeu distribue les données d'instants d'actionnement, en tant qu'au moins une partie des données de jeu, indiquant les instants auxquels le joueur doit actionner le contrôleur conformément à la musique du jeu reproduite sur la base du contenu enregistré lu à partir d'un disque CD musical prédéterminé, et un code de programme, en tant qu'au moins une partie du code de programme de jeu, destiné à amener l'ordinateur à fonctionner comme :
un moyen de reproduction de disque CD musical (24) destiné à lire un contenu enregistré à partir d'un disque CD musical (23) pour reproduire la musique en tant que musique du jeu sur la base du contenu enregistré lu en utilisant la fonction de reproduction de disque CD musical ;
un moyen d'évaluation de disque CD (14) destiné à lire le contenu enregistré à partir d'un disque CD musical (23) en utilisant la fonction de reproduction de disque CD musical pour évaluer si le disque CD musical est ou non le disque CD musical disponible dans le commerce prédéterminé sur la base du contenu enregistré lu, où le moyen d'évaluation de disque CD (14) comprend un moyen de mémorisation de données d'évaluation (26, 28), le moyen d'évaluation de disque CD (14) étant conçu pour évaluer si le disque CD musical (23) est ou non un disque CD musical prédéterminé (23) en comparant le contenu enregistré du disque CD musical (23) aux informations mémorisées à l'avance dans le moyen de mémorisation de données d'évaluation (26, 28) ; et
un moyen d'exécution de jeu musical destiné à amener le moyen de reproduction de disque CD musical à reproduire la musique en tant que musique du jeu sur la base du contenu enregistré lu à partir du disque CD musical, en réponse à une évaluation selon laquelle le disque CD musical, dont le contenu enregistré est lu par le moyen d'évaluation de disque CD musical disponible dans le commerce, est le disque CD musical prédéterminé, et destiné à indiquer les instants auxquels le joueur doit actionner le contrôleur conformément à la musique du jeu reproduite, sur la base des données d'instants d'actionnement.

8. Procédé de distribution de jeu destiné à distribuer un code de programme de jeu et des données de jeu pour amener un ordinateur à fonctionner en tant que dispositif de jeu comportant un contrôleur (32) actionné par un joueur conformément à une musique de jeu, l'ordinateur étant équipé d'une fonction de reproduction de disque CD musical pour lire un contenu enregistré à partir d'un disque CD musical afin de reproduire une musique sur la base du contenu enregistré lu, le procédé comprenant :
une étape de distribution de données d'instants d'actionnement consistant à distribuer des données d'instants d'actionnement, en tant qu'au moins une partie des données du jeu, indiquant les instants auxquels le joueur doit actionner le contrôleur conformément à la musique du jeu reproduite sur la base du contenu enregistré lu à partir d'un disque CD musical prédéterminé (23) ; et
une étape de distribution de programme consistant à distribuer un code de programme, en tant qu'au moins une partie du code de programme de jeu pour amener l'ordinateur à fonctionner comme :
un moyen de reproduction de disque CD musical destiné à lire un contenu enregistré à partir d'un disque CD musical afin de reproduire la musique en tant que musique du jeu sur la base du contenu enregistré lu en utilisant la fonction de reproduction de disque CD musical ;
un moyen d'évaluation de disque CD destiné à lire un contenu enregistré à partir d'un disque CD musical en utilisant la fonction de reproduction de disque CD musical pour évaluer si le disque CD musical est ou non le disque CD musical prédéterminé sur la base du contenu enregistré lu, où le moyen d'évaluation de disque CD (14) comprend un moyen de mémorisation de données d'évaluation (26, 28), le moyen d'évaluation de disque CD (14) étant conçu pour évaluer si le disque CD musical (23) est ou non un disque CD musical prédéterminé (23) en comparant le contenu enregistré du disque CD musical (23) à des informations mémorisées à l'avance dans le moyen de mémorisation de données d'évaluation (26, 28) ; et
un moyen d'exécution de jeu musical destiné à amener le moyen de reproduction de disque CD musical à reproduire une musique en tant que musique du jeu sur la base du contenu enregistré lu à partir du disque CD musical, en réponse à une évaluation telle que le disque CD musical, dont le contenu enregistré est lu par le moyen d'évaluation de disque CD musical, est le disque CD prédéterminé, et destiné à indiquer les instants auxquels le joueur doit actionner le contrôleur conformément à la musique du jeu reproduite, sur la base des données d'instants d'actionnement.

9. Dispositif de jeu comportant un contrôleur (32) actionné par un joueur conformément à la musique du jeu, comprenant :
un moyen de reproduction de données de musique destiné à obtenir des données de musique à partir d'un serveur de distribution de données de musique par l'intermédiaire d'un réseau de communication pour reproduire une musique en tant que musique de jeu sur la base des données de musique obtenues ;
un moyen d'évaluation de données de musique (14) destiné à évaluer si les données de musique obtenues par le moyen de reproduction de données de musique sont ou non des données de musique prédéterminées, où le moyen d'évaluation de données de musique (14) comprend un moyen de mémorisation de données d'évaluation (26, 28), le moyen d'évaluation de données de musique (14) étant conçu pour évaluer si les données de musique (23) sont ou non des données de musique prédéterminées (23) en comparant le contenu enregistré des données de musique (23) à des informations mémorisées à l'avance dans le moyen de mémorisation de données d'évaluation de données de musique (26, 28) ; un moyen d'obtention de données d'instants d'actionnement destiné à obtenir des données d'instants d'actionnement indiquant les instants auxquels le joueur doit actionner le contrôleur conformément à la musique du jeu reproduite sur la base de données de musique prédéterminées ; et
un moyen d'exécution de jeu musical destiné à amener le moyen de reproduction de données de musique à reproduire une musique en tant que musique du jeu sur la base des données de musique, en réponse à une évaluation telle que les données de musique obtenues par le moyen de reproduction de données de musique sont les données de musique prédéterminée, et destiné à indiquer les instants auxquels le joueur doit actionner le contrôleur conformément à la musique de jeu reproduite, sur la base des données d'instants d'actionnement.

10. Support de mémorisation d'informations mémorisant un code de programme de jeu et des données de jeu pour amener un ordinateur à fonctionner comme dispositif de jeu comportant un contrôleur (32) actionné par un joueur conformément à une musique de jeu, où le moyen de mémorisation d'informations mémorise, en tant qu'au moins une partie du code de programme de jeu, un code de programme destiné à amener l'ordinateur à fonctionner comme :
un moyen de reproduction de données de musique destiné à obtenir des données de musique à partir d'un serveur de distribution de données de musique par l'intermédiaire d'un réseau de communication pour reproduire une musique en tant que musique de jeu sur la base des données de musique obtenues ;
un moyen d'évaluation de données de musique (14) destiné à évaluer si les données de musique obtenues par le moyen de reproduction de données de musique sont ou non des données de musique prédéterminées, où le moyen d'évaluation de données de musique (14) comprend un moyen de mémorisation de données d'évaluation (26, 28), le moyen d'évaluation de données de musique (14) étant conçu pour évaluer si les données de musique (23) sont ou non un support de mémorisation d'informations de musique prédéterminé (23) en comparant le contenu enregistré des données de musique (23) à des informations mémorisées à l'avance dans le moyen d'évaluation de données de musique (26, 28) ;
un moyen d'obtention de données d'instants d'actionnement destiné à obtenir des données d'instants d'actionnement indiquant les instants auxquels le joueur doit actionner le contrôleur conformément à la musique du jeu reproduite sur la base des données de musique prédéterminées ; et
un moyen d'exécution de jeu musical destiné à amener le moyen de reproduction de données de musique à reproduire une musique en tant que musique du jeu sur la base des données de musique, en réponse à une évaluation telle que les données de musique obtenues par le moyen de reproduction de données de musique sont les données de musique prédéterminées, et destiné à indiquer les instants auxquels le joueur doit actionner le contrôleur conformément à la musique de jeu reproduite, sur la base des données d'instants d'actionnement.

11. Code de programme de jeu destiné à amener un ordinateur à fonctionner comme dispositif de jeu comportant un contrôleur (32) actionné par un joueur conformément à une musique de jeu, l'ordinateur étant équipé d'une fonction de reproduction de support de mémorisation d'informations de musique disponible dans le commerce destinée à lire un contenu enregistré à partir d'un support de mémorisation d'informations de musique disponible dans le commerce enregistrant au moins des données de musique, pour reproduire une musique sur la base du contenu enregistré lu, le code de programme de jeu étant destiné à :
recevoir des données d'instants d'actionnement, en tant qu'au moins une partie des données de jeu, indiquant les instants auxquels le joueur doit actionner le contrôleur conformément à la musique de jeu reproduite sur la base du contenu enregistré lu à partir d'un support de mémorisation d'informations de musique disponible dans le commerce prédéterminé,
lire un contenu enregistré à partir d'un support de mémorisation d'informations de musique disponible dans le commerce (23) pour reproduire une musique en tant que musique de jeu sur la base du contenu enregistré lu en utilisant la fonction de reproduction de support de mémorisation d'informations de musique disponible dans le commerce ;
lire un contenu enregistré à partir d'un support de mémorisation d'informations de musique disponible dans le commerce en utilisant la fonction de reproduction de support de mémorisation d'informations de musique disponible dans le commerce ;
évaluer si le support de mémorisation d'informations de musique disponible dans le commerce est ou non le support de mémorisation d'informations de musique disponible dans le commerce prédéterminé en comparant le contenu enregistré du support de mémorisation d'informations de musique à des informations mémorisées à l'avance ; et en amenant la fonction de reproduction de support de mémorisation d'informations de musique disponible dans le commerce à reproduire une musique en tant que musique de jeu sur la base du contenu enregistré lu à partir du support de mémorisation d'informations de musique disponible dans le commerce, en réponse à une évaluation telle que le support de mémorisation d'informations de musique disponible dans le commerce est le support de mémorisation d'informations de musique disponible dans le commerce prédéterminé, et
indiquer les instants auxquels le joueur doit actionner le contrôleur conformément à la musique de jeu reproduite sur la base des données d'instants d'actionnement.
